# EUROPEAN PATENT APPLICATION

(11) **EP 2 431 874 A2**
(43) Date of publication of application: **21.03.2012**
(21) Application number: 10191724.3
(22) Date of filing: 18.11.2010
(51) Int. Cl.: G06F 9/46

(54) **Information processing system, information processing program and information processing method**

(30) Priority: 10.09.2010 JP 2010202631
(71) Applicant: Nintendo Co., Ltd., Minami-ku, Kyoto 601-8501 (JP)
(72) Inventor: Morimura, Naoya, Minami-ku, Kyoto (JP); Kuwajima, Masayuki, Kyoto (JP)
(74) Representative: Bardehle, Heinz

(57) **Abstract**

A game system (100) includes game apparatuses (10P and 10Q) and a server (102). The one game apparatus (10P) has a first memory (52P) storing a software program (80) being made up of a program (82a) and save data (82b), the other game apparatus (10Q) has a second memory (52Q) capable of additionally storing a software program, and the server (102) has a third memory (106) storing a program. The one game apparatus (10P) transmits the save data in the first memory to the other game apparatus (10Q) by utilizing a local communication (S143), and the server (102) transmits the program in the third memory to the other game apparatus (10Q) by utilizing Wi-Fi communications (S317). The other game apparatus (10Q) receives the save data (S243) and then the program (S253c), and additionally stores them in the second memory as a software program (S245a, S255a, S255b).

## Description

### BACKGROUND OF THE INVENTION

### Field of the invention

The present invention relates to an information processing system, an information processing program, and an information processing method. More specifically, the present invention relates to an information processing system, an information processing program and an information processing method that transfers data between the two information processing apparatuses via a server.

### Description of the related art

As a conventional system of such a kind, one disclosed in WO2009/011040 (Patent Document 1) is known. In the related art, among a plurality of cellular phone terminals connected via the Internet connection, digital data is transferred via a system server for making a user management, an owner of digital data, etc.

However, in the related art of the Patent Document 1, as the number of digital data to be transferred increases, the load imposed on the system server becomes heavy.

### SUMMARY OF THE INVENTION

Therefore, it is a primary object of the present invention to provide a novel information processing system, an information processing program and a novel information processing method.

Another object of the present invention is to provide an information processing system, an information processing program and an information processing method that are able to transfer contents between information processing apparatuses with a load imposed on a server reduced.

The present invention employs the following configuration in order to solve the aforementioned problems.

A first aspect is an information processing system including a first information processing apparatus having a first storage storing a content being made up of first data and second data, a second information processing apparatus having a second storage capable of storing the content and a server having a third storage storing at least the second data, connecting them to allow for communications therebetween, and providing the content from the first information processing apparatus to the second information processing apparatus, wherein the first information processing apparatus comprises: a first data transmitter which directly transmits the first data stored in the first storage to the second information processing apparatus, the server comprises: a second data transmitter which transmits the second data stored in the third storage to the second information processing apparatus, the second information processing apparatus comprises: a first data receiver which directly receives the first data from the first information processing apparatus; a second data receiver which receives the second data from the server, and an additional-storage which stores the first data received by the first data receiver and the second data received by the second data receiver in the second storage as the content.

In the first aspect, an information processing system includes a first information processing apparatus, a second information processing apparatus and a server, connects them to allow for communications therebetween, and provides a content from the first information processing apparatus to the second information processing apparatus. The first information processing apparatus has a first storage storing a content being made up of first data and second data, the second information processing apparatus has a second storage capable of storing the content, and the server has a third storage storing at least the second data.

The first information processing apparatus directly transmits the first data stored in the first storage to the second information processing apparatus by a first data transmitter, and the server transmits the second data stored in the third storage to the second information processing apparatus by a second data transmitter. The second information processing apparatus directly receives the first data from the first information processing apparatus by a first data receiver, receives the second data from the server by a second data receiver, and stores the received first data and the received second data in the second storage as a content by an additional-storage.

Here, storing the first data and the second data in the second storage as a content means that in a case that the second data is an application program of a game or the like, and the first data is save data, the application program and the save data are additionally stored in the second storage to reconstruct a content (application software program) equivalent to that stored in the first storage. Furthermore, if the first data is content data with DRM (Digital Rights Management), and the second data is key data, the content data and the key data are additionally stored in the second storage to make the content being made up of the content data and the key data useable under a condition similar to or different from that stored in the first storage.

According to the first aspect, out of the first data and the second data making up of the content data stored in the first storage, the latter is also stored in the server. From the first information processing apparatus, the first data is transmitted to the second information processing apparatus, and from the server, the second data is transmitted to the second information processing apparatus. The second information processing apparatus stores the first data received from the first information processing apparatus and the second data received from the server as a content in the second storage, and therefore, it is possible to transfer the content from the first information processing apparatus to the second information processing apparatus with a load imposed on the server reduced.

A second aspect is according to the first aspect, wherein one of the first data and the second data is main body data that can be commonly used in the first information processing apparatus and the second information processing apparatus, and the other of the first data and the second data is additional data to be referred when the main body data is in use.

According to the second aspect, a content being made up of main body data that can be commonly used in the first information processing apparatus and the second information processing apparatus and additional data to be referred when the main body data is in use can efficiently and/or safely be transferred by utilizing the route from the server to the second information processing apparatus and the route from the first information processing apparatus to the second information processing apparatus.

For example, in one embodiment, as in a third aspect to be described later, the second data is the main body data (program), and from the server, the main body data is transmitted to the second information processing apparatus, and from the first information processing apparatus, the additional data (save data) is transmitted to the second information processing apparatus. In another embodiment, the first data is the main body data (content data with DRM), from the first information processing apparatus, the main body data is transmitted to the second information processing apparatus, and from the server, the additional data (key data) is transmitted to the second information processing apparatus.

A third aspect is according to the second aspect, wherein the content is a content in relation to an application software program, the second data is a program for executing the application software program in each of the first information processing apparatus and the second information processing apparatus, and the first data is save data indicating result of execution or progress of execution of the program in the first information processing apparatus.

In the third aspect, the save data being additional data inherent in the first information processing apparatus is transmitted from the first information processing apparatus, and the program being the main body data commonly used in the first information processing apparatus and the second information processing apparatus is transmitted from the server, and therefore, it is possible to efficiently and safely transfer the software content being made up of the program and the save data.

Here, in another embodiment, the first data is the content data with DRM to be used in each of the first information processing apparatus and the second information processing apparatus, and the second data is key data making the content data with DRM useable in the second information processing apparatus. The content, here, may be a content in relation to the application software program, and may be a content in relation to any one of characters, voices and images, for example. In this case, the content data with DRM being the main body data commonly used in the first information processing apparatus and the second information processing apparatus is transmitted from the first information processing apparatus, and the key data being the additional data inherent in the second information processing apparatus is transmitted from the server, and therefore, it is possible to efficiently and safely transfer the content being made up of the content data with DRM and the key data.

A fourth aspect is according to the second aspect, wherein the content is a content capable of being reproduced by a media player, the first data is main body data of the content capable of being reproduced by the media player, and the second data is key data required to reproduce the content by the media player.

According to the fourth aspect, it becomes possible to provide media data protected by the key.

A fifth aspect is according to the first aspect, wherein the first information processing apparatus further comprises: a first connector which makes a connection so as to be able to at least directly transmit data to the second information processing apparatus, and the second information processing apparatus further comprises: a second connector which makes a connection so as to be able to at least directly receive data from the first information processing apparatus, wherein transmission and reception by the first data transmitter and by the first data receiver are respectively performed after the connections by the first connector and the second connector are made.

According to the fifth aspect, prior paring makes it possible to make a connection so as to directly transmit the data.

A sixth aspect is according to the first aspect, wherein the content is set to be useable in the first information processing apparatus, the third storage further stores information in relation to an apparatus capable of using the content, the first information processing apparatus further comprises: a transfer instructor which issues to the server an transfer instruction for transferring the apparatus capable of using the content from the first information processing apparatus to the second information processing apparatus, and the server further comprises: a right of use updater which updates the information in relation to an apparatus capable of using the content stored in the third storage on the basis of the transfer instruction from the first information processing apparatus, wherein the additional-storage executes storing processing in a case that the information in relation to an apparatus capable of using the content is updated by the right of use updater.

In the sixth aspect, the content is at first set to be useable in the first information processing apparatus, and the server stores information in relation to an apparatus capable of using the content (right of use information to be described in a seventh aspect below, for example) in the third storage. The first information processing apparatus issues a transfer instruction for transferring the apparatus capable of using the content from the first information processing apparatus to the second information processing apparatus to the server by a transfer instructor, and the server updates the information in relation to an apparatus capable of using the content stored in the third storage on the basis of the transfer instruction from the first information processing apparatus by a right of use updater. The storing processing in the second information processing apparatus is executed in a case that the information in relation to an apparatus capable of using the content is thus updated in the server.

According to the sixth aspect, the transfer of the content is completed only after the information in relation to an apparatus capable of using the content is updated in the server (the content is useable in the second information processing apparatus), and therefore, it is possible to safely transfer the content.

Here, the information in relation to an apparatus capable of using the content may be in relation to the entire content, or may be in relation to any one of the first data and second data making up of the content.

A seventh aspect is according to the sixth aspect, wherein the information in relation to an apparatus capable of using the content is right of use information of the content.

An eighth aspect is according to the sixth aspect, wherein the second data transmitter transmits the second data to the second information processing apparatus after the information in relation to an apparatus capable of using the content is updated by the right of use updater.

According to the eighth aspect, it is impossible for the second information processing apparatus to perform the storing processing before the information in relation to an apparatus capable of using the content is updated. In other words, the server can restrict the execution of the storing processing in the second information processing apparatus, capable of heightening security.

A ninth aspect is according to any one of the sixth to eighth aspects, wherein the server further comprises: a first completion notifier which makes a completion notification to the first information processing apparatus that the information in relation to an apparatus capable of using the content has been updated after the information in relation to an apparatus capable of using the content is updated by the right of use updater, the first information processing apparatus further comprises: a second completion notifier which makes a completion notification to the second information processing apparatus that the information in relation to an apparatus capable of using the content has been updated on the basis of the completion notification from the server, wherein the additional-storage stores the received content in the second storage on the basis of the completion notification from the first information processing apparatus.

In the ninth aspect, the server makes a completion notification to the first information processing apparatus by a first completion notifier after the information in relation to an apparatus capable of using the content is updated, and the first information processing apparatus that receives the completion notification from the server makes a completion notification to the second information processing apparatus by a second completion notifier. The storing processing by the second information processing apparatus is executed on the basis of the completion notification from the first information processing apparatus.

According to the ninth aspect, the storing processing in the second information processing apparatus is executed when the completion notification from the first information processing apparatus is received after the information in relation to an apparatus capable of using the content is updated, capable of heightening the security. Furthermore, the first information processing apparatus can control the execution of the storing processing in the second information processing apparatus, and thus, it becomes easy to improve a customer convenience via the first information processing apparatus. If the transmission of the second data from the server is executed after the information in relation to an apparatus capable of using the content is updated as in the aforementioned eighth aspect, it is possible to more heighten the security, which is preferable.

A tenth aspect is according to the ninth aspect, wherein the first information processing apparatus comprises: an eraser which erases the content from the first storage after the first data is transmitted by the first data transmitter and the completion notification is made by the second completion notifier.

In the tenth aspect, the first information processing apparatus erases the content from the first storage by an eraser after the first data is transmitted to the second information processing apparatus, and the completion notification is made.

According to the tenth aspect, in accordance with the update of the information in relation to an apparatus capable of using the content, the content is erased from the first information processing apparatus, and whereby, it is possible to heighten the security.

Here, the object to be erased may be the entire content, or may be any one of the first data and second data making up of the content.

Furthermore, the timing of erasing may be at a time when the completion notification is received from the server (thus, before a completion notification is performed on the second information processing apparatus), or when the storing processing is completed in the second information processing apparatus (noted, in this case, the second information processing apparatus is required to notify the first information processing apparatus of the completion of the storing).

An eleventh aspect is according to any one of the sixth to eighth aspects, wherein the server further comprises: a completion notifier which makes a completion notification to the second information processing apparatus that the information in relation to an apparatus capable of using the content has been updated after the information in relation to an apparatus capable of using the content is updated by the right of use updater, wherein the additional-storage stores the received content in the second storage on the basis of the completion notification from the server.

In the eleventh aspect, the server makes a completion notification to the second information processing apparatus by a completion notifier after the information in relation to an apparatus capable of using the content is updated. The storing processing in the second information processing apparatus is executed on the basis of the completion notification from the server.

According to the eleventh aspect, the storing processing in the second information processing apparatus is executed when the completion notification from the server is received after the information in relation to an apparatus capable of using the content is updated in the server, capable of heightening the security. Furthermore, the completion notification is directly transmitted to the second information processing apparatus from the server, capable of reducing traffic between the first information processing apparatus and the second information processing apparatus.

A twelfth aspect is according to the first aspect, wherein the first information processing apparatus further comprises: an eraser which erases the content from the first storage after the first data is transmitted by the first data transmitter.

In the twelfth aspect, the content is erased from the first storage after the first data is transmitted.

If the first information processing apparatus erases the first data before completion of transmitting the first data, the first data is lost, but according to the twelfth aspect, it is possible to avoid this matter.

A thirteenth aspect is according to the first aspect, wherein the first information processing apparatus further comprises: a content-related information transmitter which transmits content-related information which is related to the content to the second information processing apparatus, the second information processing apparatus further comprises: a content-related information receiver which receives the content-related information from the first information processing apparatus; and a second data requester which requests the second data to the server on the basis of the content-related information received from the first information processing apparatus, wherein the second data transmitter extracts and transmits the second data from the third storage on the basis of the request from the second data requester.

In the thirteenth aspect, the first information processing apparatus transmits content-related information which is related to the content to the second information processing apparatus by a content-related information transmitter. The second information processing apparatus receives the content-related information from the first information processing apparatus by a content-related information receiver, and requests the second data to the server on the basis of the received content-related information by a second data requester. The server extracts and transmits the second data from the third storage on the basis of the request by the second data transmitter.

According to the thirteenth aspect, the first information processing apparatus previously notifies the second information processing apparatus of the information related to the content to be transferred, and whereby, the second information processing apparatus can acquire the second data corresponding to the content from the server.

A fourteenth aspect is according to the first aspect, wherein the first information processing apparatus and the server, and the server and the second information processing apparatus are connected to be able to communicate with each other via the Internet, the first information processing apparatus and the second information processing apparatus are connected to be able to communicate with each other by a predetermined short distance communication system, transmission by the second data transmitter and reception by the second data receiver are performed via the Internet, and transmission by the first data transmitter and reception by the first data receiver are performed by the predetermined short distance communication system.

Here, the predetermined short distance communication system is typically a short distance wireless communication system, but may be a wire communication system by utilizing a connecting cable. As a short distance wireless communication system, there are Bluetooth (registered trademark), ZigBee (registered trademark), Wibree (registered trademark), UWB (Ultra Wide Band), NFC (Near Field Communication), infrared rays system, etc.

A fifteenth aspect is an information processing program for an information processing system including a first information processing apparatus having a first storage storing a content being made up of first data and second data, a second information processing apparatus having a second storage capable of storing the content and a server having a third storage storing at least the second data, connecting them to allow for communications therebetween, and providing the content from the first information processing apparatus to the second information processing apparatus, the information processing program causes a computer of the first information processing apparatus to function as: a first data transmitter which directly transmits the first data stored in the first storage to the second information processing apparatus, the information processing program causes a computer of the server to function as: a second data transmitter which transmits the second data stored in the third storage to the second information processing apparatus, the information processing program causes a computer of the second information processing apparatus to function as: a first data receiver which directly receives the first data from the first information processing apparatus; a second data receiver which receives the second data from the server, and an additional-storage which stores the first data received by the first data receiver and the second data received by the second data receiver in the second storage as the content.

A sixteenth aspect is an information processing method to be performed by an information processing system including a first information processing apparatus having a first storage storing a content being made up of first data and second data, a second information processing apparatus having a second storage capable of storing the content and a server having a third storage storing at least the second data, connecting them to allow for communications therebetween, and providing the content from the first information processing apparatus to the second information processing apparatus, comprising steps of: directly transmitting, executed by said first information processing apparatus, said first data stored in said first storage to said second information processing apparatus; and transmitting, executed by said server, said second data stored in said third storage to said second information processing apparatus, wherein said second information processing apparatus executing: directly receiving said first data from said first information processing apparatus; receiving said second data from said server, and storing said received first data and said received second data in said second storage as said content.

In each of the fifteenth and sixteenth aspects, similar to the first aspect, it is possible to transfer the content from the first information processing apparatus to the second information processing apparatus with a load imposed on the server reduced.

According to the present invention, it is possible to implement an information processing system, an information processing program and an information processing method that are able to transfer contents between information processing apparatuses with a load imposed on a server reduced.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is an external view of a game apparatus to be utilized in one embodiment of the present invention to show a front surface in an open state;
Figure 2 is an external view of the game apparatus to show a side surface in an open state;
Figure 3 is an external view of the game apparatus, Figure 3(A) shows one side surface in a close state, Figure 3(B) shows a top surface in a close state, Figure 3(C) shows the other side surface in a close state, and Figure 3(D) shows a bottom surface in a close state;
Figure 4 shows an illustrative view showing a situation in which the game apparatus is held by the user;
Figure 5 is a block diagram showing one example of an electric configuration of the game apparatus;
Figure 6 is a block diagram showing a game system of one embodiment of the present invention in which two game apparatuses (the first game apparatus P and the second game apparatus Q) and a server are connected to be communicated with each other;
Figure 7 is a sequence diagram showing a part of movement processing to be executed in the game system;
Figure 8 is a sequence diagram showing another part of the movement processing to be executed in the game system;
Figure 9 is a sequence diagram showing a still another part of the movement processing to be executed in the game system;
Figure 10 is an illustrative view showing a memory map of the server;
Figure 11 (A) and Figure 11 (B) are illustrative views respectively showing memory maps of the first game apparatus P and the second game apparatus Q at a start of moving;
Figure 12(A) and Figure 12(B) are illustrative views respectively showing memory maps of the first game apparatus P and the second game apparatus Q at an end of the moving;
Figure 13 is an illustrative view showing an opponent deciding screen to be displayed on the first game apparatus P and the second game apparatus Q before decision between a source and a destination;
Figure 14 (A) and Figure 14 (B) are illustrative views showing one example of a source-and-destination-deciding screen to be displayed on the first game apparatus P and the second game apparatus Q after confirmation of an opponent;
Figure 15 is an example of a pair of screens to be displayed on the sides of the source and the destination before start of a movement, Figure 15(A) shows a password input prompting screen on the side of the destination of the movement, and Figure 15(B) shows a password input screen;
Figure 16 is another example of a pair of screens to be displayed on the sides of the source and the destination before start of a movement, Figure 16(A) shows a moving method selection screen, and Figure 16(B) shows a moving method selection prompting screen on the side of the source of movement;
Figure 17 is a still another example of a pair of screens to be displayed on the sides of the source and the destination before start of movement, Figure 17(A) shows an object to be moved (category) selection screen, and Figure 17(B) shows an object selection prompting screen on the side of the source of the movement;
Figure 18 is a further example of a pair of screens to be displayed on the sides of the source and the destination before start of movement, Figure 18(A) shows a software selection screen, and Figure 18(B) shows a software selection prompting screen on the side of the source of the movement;
Figure 19 is an example of a pair of screens to be displayed on the side of the source and the destination during a movement, Figure 19(A) shows a transmission screen, and Figure 19(B) shows a reception screen;
Figure 20 is a pair of screens to be displayed on the side of the source and the destination during suspending a movement, Figure 20(A) shows a transmission screen in which a dialogue to prompt a player to retry the movement is presented on the side of the destination of the movement, and Figure 20(B) shows a reception screen on which a retry button is displayed;
Figure 21 is a flowchart showing a part of an operation (movement preparation processing including decision of the source and destination) by a CPU of the game apparatus;
Figure 22 is a flowchart showing another part of the operation (processing at a time of the source of a movement) by the CPU of the game apparatus;
Figure 23 is a flowchart showing a still another part of the operation (processing sequel to Figure 22: in a case that a software program is selected as an object) by the CPU of the game apparatus;
Figure 24 is a flowchart showing another part of the operation by the CPU of the game apparatus (processing sequel to Figure 23);
Figure 25 is a flowchart showing a part of the operation (processing at a time of the destination of a movement) by the CPU of the game apparatus and corresponds to Figure 22;
Figure 26 is a flowchart showing another part of the operation (processing sequel to Figure 25: in a case that a software program is selected as an object) by the CPU of the game apparatus, and corresponds to Figure 23;
Figure 27 is a flowchart showing a still another part of the operation (processing sequel to Figure 26) by the CPU of the game apparatus, and corresponds to Figure 24;
Figure 28 is a flowchart showing another part of the operation (processing sequel to Figure 22: in a case that save data is selected as an object) by the CPU of the game apparatus;
Figure 29 is a flowchart showing a still another part of the operation (processing sequel to Figure 25: in a case that the save data is selected as an object) by the CPU of the game apparatus, and corresponds to Figure 28;
Figure 30 is a flowchart showing a further part of the operation (processing sequel to Figure 22: in a case that set data is selected as an object) by the CPU of the game apparatus;
Figure 31 is a flowchart showing another part of the operation (processing sequel to Figure 25: in a case that the set data is selected as an object) by the CPU of the game apparatus, and corresponds to Figure 30;
Figure 32 is a flowchart showing still another part of the operation (processing sequel to Figure 22: in a case that a collective movement is selected as a method) by the CPU of the game apparatus;
Figure 33 is a flowchart showing a further part of the operation (processing sequel to Figure 32) by the CPU of the game apparatus;
Figure 34 is a flowchart showing another part of the operation (processing sequel to Figure 33) by the CPU of the game apparatus;
Figure 35 is a flowchart showing another part of the operation (processing sequel to Figure 25: in a case that the collective movement is selected as a method) by the CPU of the game apparatus, and corresponds to Figure 32;
Figure 36 is a flowchart showing a still another part of the operation (processing sequel to Figure 35) by the CPU of the game apparatus, and corresponds to Figure 33;
Figure 37 is a flowchart showing another part of the operation (processing sequel to Figure 36) by the CPU of the game apparatus, and corresponds to Figure 34;
Figure 38 is a flowchart showing another part of the operation (background processing during a local communication: operation information mutual notification) by the CPU of the game apparatus;
Figure 39 is a flowchart showing a part of an operation by a CPU of the server;
Figure 40 is an illustrative view showing a pair of screens to be displayed on the source and the destination in a modified example in which in a case that the destination of movement does not agree to EULA, an agree operation is performed on the side of the destination of a movement, Figure 40(A) shows an EULA agree prompting screen on the side of the destination of the movement, and Figure 40(B) shows an EULA agreement screen;
Figure 41 is a flowchart showing processing to be executed between the destination of the movement and the server in association with the EULA agreement screen in Figure 40(B), Figure 41(A) shows processing of the destination of the movement, and Figure 41 (B) shows processing of the server;
Figure 42 is a flowchart showing processing on the side of the source of a movement in a modified example in which the server directly notifies a right of use transfer completion notification to the destination of the movement;
Figure 43 is a flowchart showing processing on the side of the destination of movement corresponding to Figure 42; and
Figure 44 is a sequence diagram showing another movement processing (movement of the content attached with a DRM) to be executed in the game system.

### DETAILED DESCRIPTION OF THE PREFERRED EMBODIMENTS

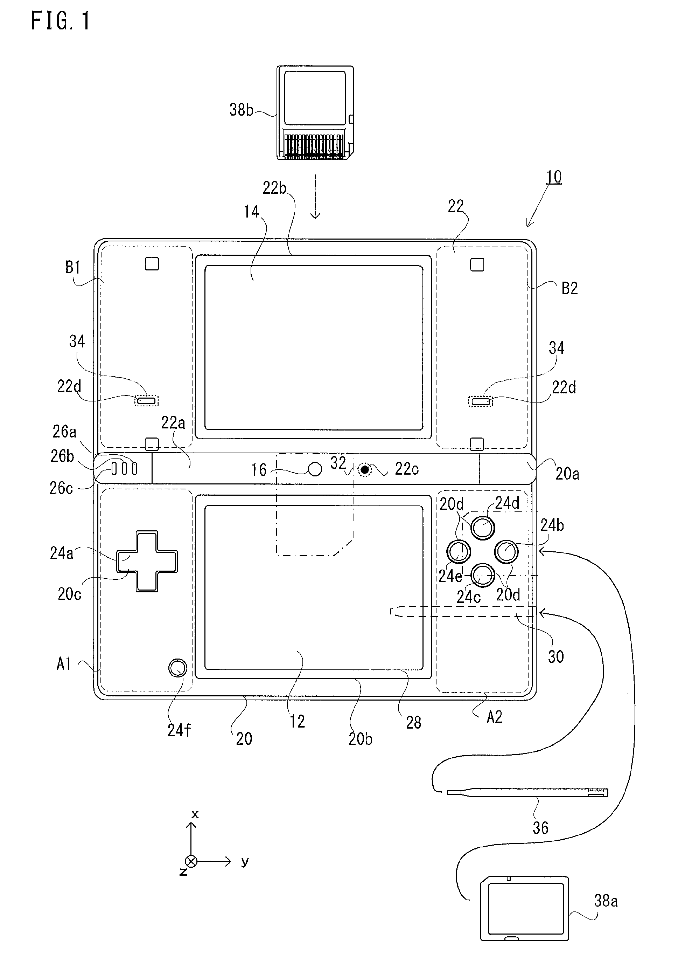

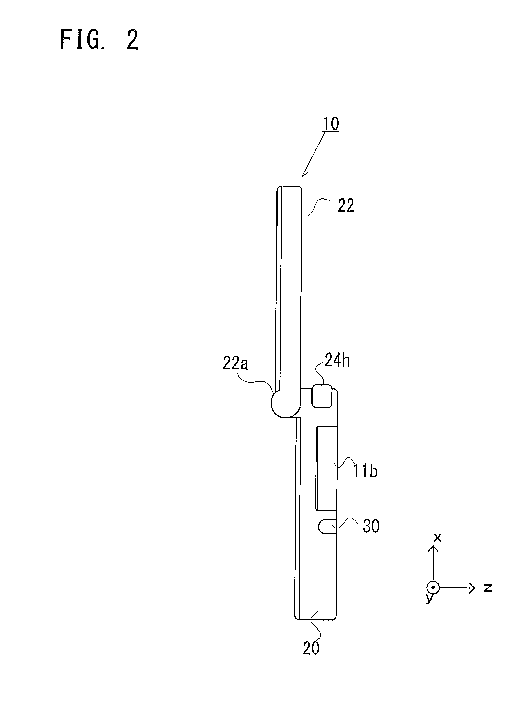

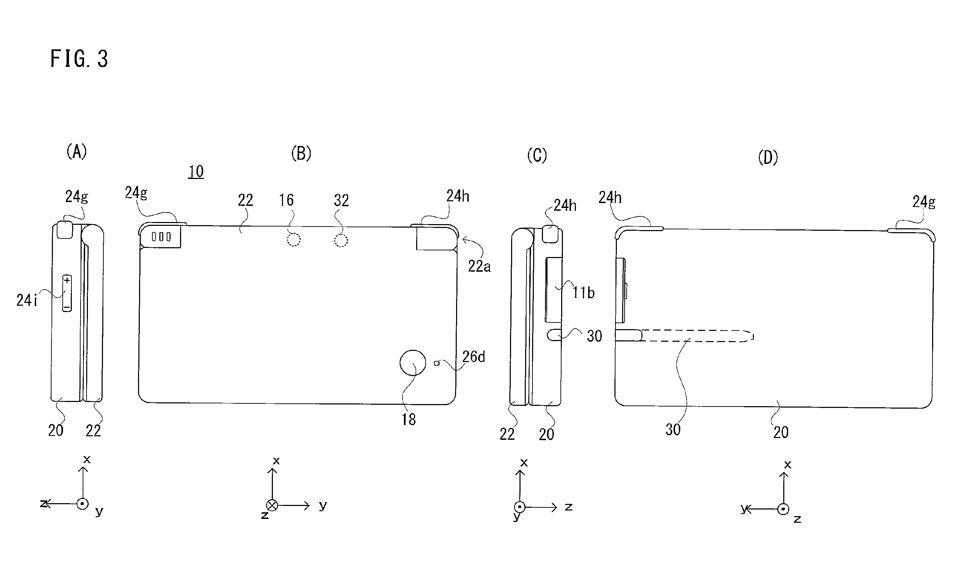

In Figure 1 to Figure 3, an external view of a game apparatus 10 of one embodiment of the present invention is shown. The game apparatus 10 is a foldable game apparatus, and each of Figure 1 and Figure 2 shows the game apparatus 10 in an opened state (open state), and Figure 3 shows the game apparatus 10 in a closed state (close state). Furthermore, Figure 1 is a front view of the game apparatus 10 in the open state, and Figure 2 is a side view of the game apparatus in the open state. The game apparatus 10 has two displays (LCDs 12 and 14) and two cameras (cameras 16 and 18), can image images with the cameras, display the imaged images and store the data of the imaged images.

The game apparatus has a size small enough to be held with one hand or both hands in an open state

The game apparatus 10 has two housings of a lower housing 20 and an upper housing 22. The lower housing 20 and the upper housing 22 are connected with each other so as to be opened or closed (foldable). In this embodiment, the respective housings 20 and 22 are formed in the form of plate of a horizontally long rectangular, and are rotatably connected with each other at the long sides of both of the housings.

The upper housing 22 is supported pivotally at a part of the upper side of the lower housing 20. This makes the game apparatus 10 to take a close state (the angle formed by the lower housing 20 and the upper housing 22 is about 0° (see Figure 3)) and an open state (the angle formed by the lower housing 20 and the upper housing 22 is about 180° (see Figure 2)). The user generally uses the game apparatus 10 in the open state, and keeps the game apparatus 10 in the close state when not using the game apparatus 10. Furthermore, the game apparatus 10 can maintain the angle formed by the lower housing 20 and the upper housing 22 at an arbitrary angle between the close state and the open state by friction, etc. exerted on the hinge as well as the close state and the open state as described above. That is, the upper housing 12 can be fixed with respect to the lower housing 14 at an arbitrary angle.

The configuration of the lower housing 20 is first explained. As shown in Figure 1, the game apparatus 10 has the lower LCD (liquid crystal display) 12. The lower LCD 12 takes a horizontally-long shape, and is arranged such that the direction of the long side is coincident with the long side of the lower housing 20. The lower LCD 12 is provided on an inner surface of the lower housing 20. Accordingly, if the game apparatus 10 is not in use, the game apparatus 10 is in the close state to thereby prevent the screen of the lower LCD 12 from being soiled, damaged, and so forth. Additionally, in this embodiment, an LCD is used as a display, but other arbitrary displays, such as a display utilizing EL (Electro Luminescence), for example, may be used. Furthermore, the game apparatus 10 can employ a display of an arbitrary resolution. Additionally, in a case that the game apparatus 10 is used as an imaging device, the lower LCD 12 is used for displaying, in real time, images (through image) imaged by the camera 16 or 18.

The inner surface of the lower housing 20 is formed to be approximately planar. At the center of the inner surface, an opening 20b for exposing the lower LCD 12 is formed. At the left of the opening 20b (in the negative direction of the y axis in the drawing), an opening 20c is formed, and at the right of the opening 20b, an opening 20d is formed. The openings 20b and 20c are for exposing the respective keytops (the top surfaces of the respective buttons 24a to 24e). Then, the screen of the lower LCD 12 provided inside the lower housing 20 is exposed from the opening 20b, and the respective keytops are exposed from the openings 20c and 20d. Thus, on the inner surface of the lower housing 20, on both sides of the opening 20b for the lower LCD 12 set at the center, non-screen areas (dotted line areas A1 and A2 shown in Figure 1. More specifically, areas for arranging the respective buttons 24a to 24e; button arranging area) are provided.

On the lower housing 20, the respective buttons 24a to 24i and a touch panel 28 are provided as input devices. As shown in Figure 1, the direction input button 24a, the button 24b, the button 24c, the button 24d, the button 24e, and the power button 24f out of the respective buttons 24a to 24i are provided on the inner surface of the lower housing 20. The direction input button 24a is utilized for a selecting operation, for example, and the respective buttons 24b to 24e are utilized for a decision operation and a cancelation operation, for example. The power button 24f is utilized for turning on/off the power of the game apparatus 10. Here, the direction input button 24a and the power button 24f are provided on one side (left side in Figure 1) of the lower LCD 12 provided at substantially the center of the lower housing 20, and the buttons 24b to 24e are provided at the other side (right side in Figure 1) of the lower LCD 12. The direction input button 24a and the buttons 24b to 24e are utilized for performing various operations to the game apparatus 10.

Figure 3 (A) is a left side view of the game apparatus 10 in the close state, Figure 3(B) is a front view of the game apparatus 10, Figure 3(C) is a right side view of the game apparatus 10, and Figure 3(D) is a rear view of the game apparatus 10. As shown in Figure 3 (A), the volume button 24i is provided on the left side surface of the lower housing 20. The volume button 24i is utilized for adjusting a volume of a speaker 34 furnished in the game apparatus 10. Furthermore, as shown in Figure 3(D), the button 24h is provided at the right corner of the upper side surface of the lower housing 20. The button 24g is provided at the left corner of the upper side surface of the lower housing 20. The both of the buttons 24g and 24h are utilized for performing an imaging instructing operation (shutter operation) on the game apparatus 10, for example. Alternatively, both of the buttons 24g and 24h may be made to work as shutter buttons. In this case, a right-handed user can use the button 24h, and a left-handed user can use the button 24g, capable of improving usability for both of the users. Additionally, the game apparatus 10 can constantly make both of the buttons 24g and 24h valid as shutter buttons, or the game apparatus 10 is set to be a right-handed use or a left-handed use (the setting is input by the user according to a menu program, etc. and the set data is stored), and when the right-handed use is set, only the button 24h is made valid, and when the left-handed use is set, only the button 24g may be made valid.

As shown in Figure 1, the game apparatus 10 is further provided with the touch panel 28 as an input device other than the respective operation buttons 24a to 24i. The touch panel 28 is set on the screen of the lower LCD 12. In this embodiment, the touch panel 28 is a touch panel of a resistance film system. Here, the touch panel can employ arbitrary push type touch panels over the resistance film system. In this embodiment, as the touch panel 28, a touch panel having a resolution (detection accuracy) the same as that of the lower LCD 12 is utilized. The resolution of the touch panel 28 and the resolution of the lower LCD 12 are not necessarily coincident with each other. Furthermore, at the right side surface of the lower housing 20, an inserting portion 30 (shown by a dotted line in Figure 1 and Figure 3(D)) is provided. The inserting portion 30 can accommodate a touch pen 36 utilized for performing an operation on the touch panel 28. It should be noted that an input to the touch panel 28 is generally performed by means of the touch pen 36, but can be performed on the touch panel 28 with fingers of the user besides the touch pen 36.

As shown in Figure 2 and Figure 3(C), on the right side surface of the lower housing 20, an openable and closeable cover portion 11b is provided. Inside the cover portion 11b, a loading slot (chain double-dashed line) into which a memory card 38a is loaded and a connector (not illustrated) for electrically connecting the game apparatus 10 and the memory card 38a are provided. The memory card 38a is detachably attached to a connector. The memory card 38a is used for storing (saving) image data imaged by the game apparatus 10, for example and is formed of a nonvolatile memory, or the like.

In addition, on a top surface of the lower housing 20, a loading slot (dashed line) into which a memory card 38b is loaded and a connector (not illustrated) electrically connecting the game apparatus 10 and the memory card 38b are provided. A memory card 38b is used for storing a program to be operated in the game apparatus 10, for example.

As shown in Figure 1, three LEDs 26a-26c are attached to a left part of the shaft 20a of the lower housing 20. Here, the game apparatus 10 can make a wireless communication (Wi-Fi communication and local communication: described later) with another appliance and another game apparatus (not illustrated) of the same kind, and the first LED 26a lights up when the wireless communication is established. The second LED 26b lights up during charge of the game apparatus 10. The third LED 26c lights up when the game apparatus 10 is turned on. Accordingly, by the three LEDs 26a-26c, it is possible to notify the communication-established state, a charge state, and an on-off situation of the power source of the game apparatus 10 to the user.

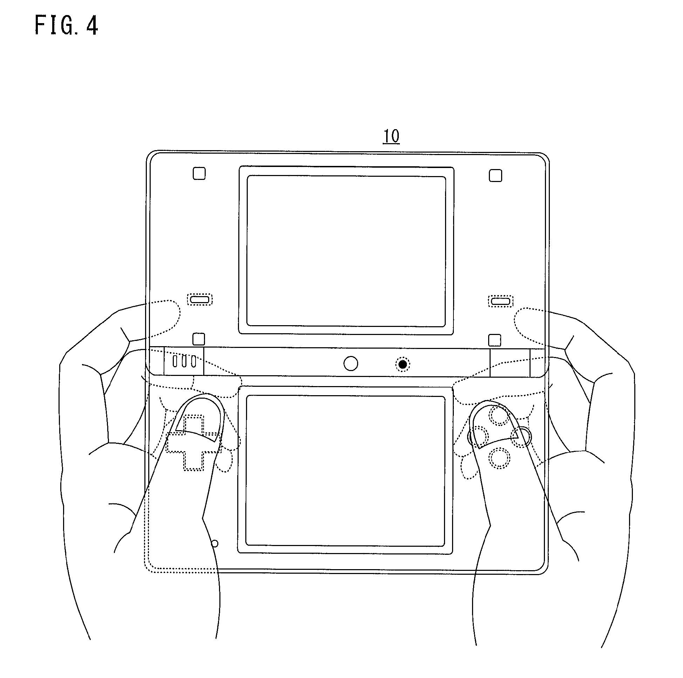

As described above, the lower housing 20 is provided with the input device (touch panel 28 and respective buttons 24a-24i) for performing an operation input to the game apparatus 10. Accordingly, when utilizing the game apparatus 10, the user can perform an operation on the game apparatus 10 while holding the lower housing 20. Figure 4 shows a situation in which the user holds the game apparatus 10 with both of the hands. As shown in Figure 4, the user holds the side surface and the outer surface (surface opposite to the inner surface) of the lower housing 20 with the palms, the middle fingers, the ring fingers and the little fingers of both of the hands in a state that the respective LCDs 12 and 14 are directed to the user. By holding the game apparatus 10 in such a manner, the user can perform operations as to the respective buttons 24a-24e with the thumbs, and perform operations as to the buttons 24g and 24h with the index fingers while holding the lower housing 20.

On the other hand, the upper housing 22 has a configuration for imaging an image (camera), and a configuration for displaying the imaged image (display). The configuration of the upper housing 22 is explained below.

As shown in Figure 1, the game apparatus 10 has the upper LCD 14. The upper LCD 14 is set to the upper housing 22. The upper LCD 14 takes a horizontally-long shape, and is arranged such that the direction of the long side is coincident with the long side of the upper housing 22. The upper LCD 14 is provided on the inner surface of the upper housing 2 (the inner surface when the game apparatus 10 is in the close state). Accordingly, if the game apparatus 10 is not in use, the game apparatus 10 is set to the close state to thereby prevent the screen of the upper LCD 14 from being soiled, damaged, and so forth. Here, similar to the lower LCD 12, in place of the upper LCD 14, a display with an arbitrary form and an arbitrary resolution may be utilized. It should be noted that in another embodiment, a touch panel may be provided on the upper LCD 14 as well.

Furthermore, the game apparatus 10 has the two cameras 16 and 18. The respective cameras 16 and 18 are housed in the upper housing 22. As shown in Figure 1, the inward camera 16 is attached to the inner surface of the upper housing 22. On the other hand, as shown in Figure 3(B), the outward camera 18 is attached to the surface being opposed to the surface to which the inward camera 16 is provided, that is, the outer surface of the upper housing 22 (outer surface when the game apparatus 10 is in the close state). Thus, the inward camera 16 can image a direction to which the inner surface of the upper housing 22 is turned, and the outward camera 18 can image a direction opposite to the imaging direction of the inward camera 16, that is, a direction to which the outer surface of the upper housing 22 is turned. As described above, in this embodiment, the two cameras 16 and 18 are provided so as to make the imaging directions opposite to each other. Accordingly, the user can image the two different directions without shifting the game apparatus 10 inside out. For example, the user can image a landscape as the user is seen from the game apparatus 10 with the inward camera 16, and can image a landscape as the direction opposite to the user is seen from the game apparatus 10 with the outward camera 18.

Furthermore, the inward camera 16 is attached to the center of the shaft portion 22a formed at the bottom of the upper housing 22. That is, the inward camera 16 is attached at the center of the part where the two housings 20 and 22 are connected. Accordingly, in a case that the game apparatus 10 is in the open state, the inward camera 16 is arranged between the two LCDs 12 and 14 (see Figure 1). In other words, the inward camera 16 is positioned in the vicinity of the center of the game apparatus 10. Here, "the center of the game apparatus 10" means the center of the operation surface of the game apparatus 10 (surface being made up of the inner surfaces of the respective housings 20 and 22 in the open state). Here, it may be said that the inward camera 16 is arranged in the vicinity of the center in the horizontal direction of the LCDs 12 and 14. In this embodiment, when the game apparatus 10 is set to the open state, the inward camera 16 is arranged in the vicinity of the center of the game apparatus 10, and therefore, in a case that the user images the user himself or herself by the inward camera 16, the user may hold the game apparatus 10 at a position directly opposite to the game apparatus 10. That is, if the user holds the game apparatus at a normal holding position, the user is positioned at approximately the center of an imaging range, and the user himself or herself can easily be within the imaging range.

Furthermore, as shown in Figure 3(B), the outward camera 18 is arranged at the upper end of the upper housing 22 (portion far away from the lower housing 20) in a case that the game apparatus 10 is set to the open state. Here, since the outward camera 18 is not for imaging the user holding the game apparatus 10, there is less need for being provided at the center of the game apparatus 10.

Furthermore, as shown in Figure 1 or Figure 3(B), a microphone 32 is housed in the upper housing 22. More specifically, the microphone 32 is attached to the shaft portion 22a of the upper housing 22. In this embodiment, the microphone 32 is attached around the inward camera 16 (next to the inward camera 16 along the y axis), and specifically attached next to the inward camera 16 in the positive direction of the y axis. Furthermore, a through hole for microphone 22c is mounted to the shaft portion 22a at a position corresponding to the microphone 32 (next to the inward camera 16) such that the microphone 32 can detect a sound outside the game apparatus 10. Alternatively, the microphone 32 may be housed in the lower housing 20. For example, the through hole for microphone 22c is provided on the inner surface of the lower housing 20, specifically, at the lower left (button arranging area A1) of the inner surface of the lower housing 20, and the microphone 32 may be arranged in the vicinity of the through hole for microphone 22c within the lower housing 20. Furthermore, the microphone 32 is attached in such a direction that its sound collecting direction (direction in which the sensitivity becomes maximum) is approximately in parallel with the imaging direction (optical axis) of the inward camera 16 (in other words, the sound collecting direction and the imaging direction are approximately in parallel with the z axis). Thus, a sound generated within the imaging range of the inward camera 16 is suitably acquired by the microphone 32. That is, detection of a sound input through the microphone 32 and detection of the user by the imaged image by the inward camera can be simultaneously performed, and accuracy of the detections can be improved, at the same time.

As shown in Figure 3(B), on the outer surface of the upper housing 22, a fourth LED 26d is attached. The fourth LED 26d is attached around the outward camera 18 (at the right side of the outward camera 18 in this embodiment). The fourth LED 26d lights up at a time when an imaging is made with the inward camera 16 or the outward camera 18 (shutter button is pushed). Furthermore, the fourth LED 38 continues to light up while a motion image is imaged by the inward camera 16 or the outward camera 18. By making the fourth LED 26d light up, it is possible to inform an object to be imaged that an imaging with the game apparatus 10 is made (is being made).

Furthermore, the inner surface of the lower housing 22 is formed to be approximately planar. As shown in Figure 1, at the center of the inner surface, an opening 22b for exposing the upper LCD 14 is formed. The screen of the upper LCD 14 housed inside the upper housing 22 is exposed from the opening 22b. Furthermore, on both side of the aforementioned opening 22b, a sound release hole 22d is formed one by one. Inside the sound release hole 22d of the upper housing 22, a speaker 34 is hosed. The sound release hole 22d is a through hole for releasing a sound from the speaker 34.

Thus, on the inner surface of the upper housing 22, non-display areas (areas B 1 and B2 represented by a dotted lines in Figure 1. More specifically, areas for arranging the speaker 34; speaker arranging areas) are provided on both sides of the opening 21B set at the center of the upper LCD 14. The two sound release holes 22d are arranged at approximately the center of the horizontal direction of each speaker arranging area with respect to the horizontal direction, and at the lower portion of each speaker arranging area with respect to the vertical direction (area close to the lower housing 20).

Here, as described above, by providing the non-display areas on the lower housing 20 and the upper housing 22 at the same positions in the horizontal direction, the game apparatus 10 is configured to help user's holding not only when it is held horizontally as shown in Figure 4, but also when it is held vertically (a state rotated to left or right by 90° from the state shown in Figure 4).

As described above, the upper housing 22 is provided with the cameras 16 and 18 which are configured to image an image and the upper LCD 14 as a display means for mainly displaying the imaged image. On the other hand, the lower housing 20 is provided with the input device (touch panel 28 and respective buttons 24a-24i) for performing an operation input to the game apparatus 10. Accordingly, when utilizing the game apparatus 10 as an imaging device, the user can perform an input to the input device with the lower housing 20 holding while viewing the imaged image (image imaged by the camera) displayed on the upper LCD 14.

Furthermore, in the vicinity of the camera 16 of the upper housing 22, the microphone 32 configured to input a sound is provided, and the game apparatus 10 can also be used as a recording device. In addition, the user performs a sound input over the microphone 32, and the game apparatus 10 can execute the game processing and application processing other than the game on the basis of the microphone input information as well.

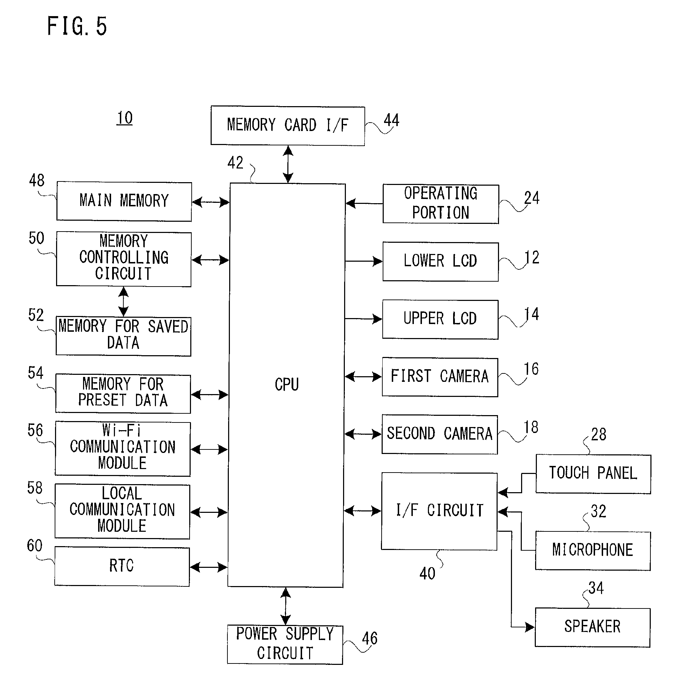

Figure 5 is a block diagram showing an internal configuration (electronic configuration) of the game apparatus 10. As shown in Figure 5, the game apparatus 10 includes electronic components, such as a CPU 42, a main memory 48, a memory controlling circuit 50, a memory for saved data 52, a memory for preset data 54, a memory card interface (memory card I/F) 44, a Wi-Fi communication module 56, a local communication module 58, a real-time clock (RTC) 60, a power supply circuit 46, and an interface circuit (I/F circuit) 40, etc. Theses electronic components are mounted on an electronic circuit board, and housed in the lower housing 20 (or the upper housing 22 may also be appropriate).

The CPU 42 is an information processing means to execute various programs. In a case that the game apparatus 10 is utilized as an imaging device, the program for it is stored in the memory (memory for saved data 52, for example) within the game apparatus 10. The CPU 42 executes the program to allow the game apparatus 10 to function as an imaging device. Here, the programs to be executed by the CPU 42 may previously be stored in the memory within the game apparatus 10, may be acquired from the memory card 38b, and may be acquired from another appliance by communicating with this another appliance.

The CPU 42 is connected with the main memory 48, the memory controlling circuit 50, and the memory for preset data 54. Furthermore, the memory controlling circuit 50 is connected with the memory for saved data 52. The main memory 48 is a memory means to be utilized as a work area and a buffer area of the CPU 42. That is, the main memory 48 stores various data to be utilized in the game processing and the application processing, and stores a program obtained from the outside (memory cards 38, another appliance, etc.). In this embodiment, a PSRAM (Pseudo-SRAM) is used, for example, as a main memory 48. The memory for saved data 52 is a memory means for storing (saving) a program to be executed by the CPU 42, data of an image imaged by the respective cameras 16 and 18, etc. The memory for saved data 52 is configured by a non-volatile memory, such as a NAND type flash memory, for example. The memory controlling circuit 50 is a circuit for controlling reading and writing from and to the memory for saved data 52 according to an instruction from the CPU 42. The memory for preset data 54 is a memory means for storing data (preset data), such as various parameters, etc. which are previously set in the game apparatus 10. As a memory for preset data 54, a flash memory to be connected to the CPU 42 through an SPI (Serial Peripheral Interface) bus can be used.

The memory card I/F 44 is connected to the CPU 42. The memory card I/F 44 performs reading and writing data from and to the memory cards 38a and 38b attached to the connector according to an instruction from the CPU 42. In this embodiment, the image data imaged by the respective cameras 16 and 18 is written to the memory card 38a, and the image data stored in the memory card 38a is read from the memory card 38a and stored in the memory for saved data 52.

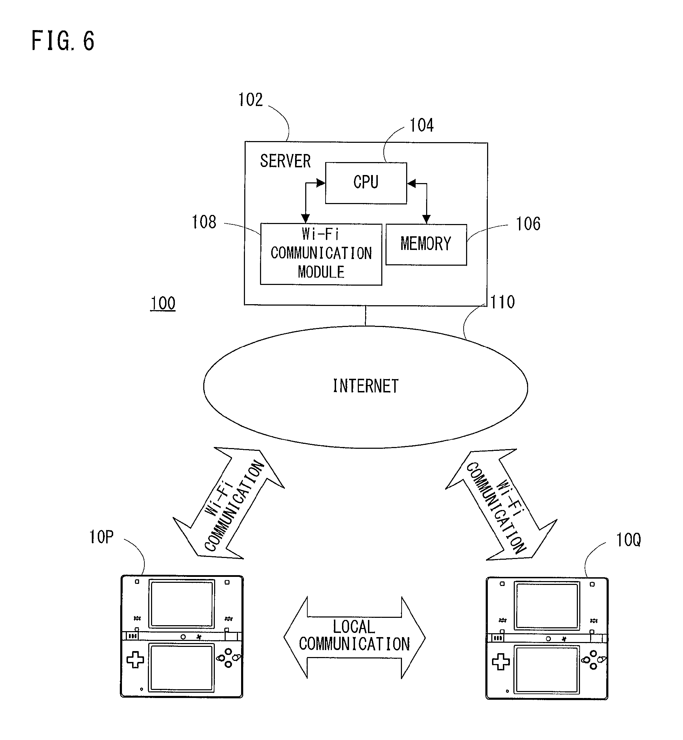

The Wi-Fi communication module 56 connects to a wireless LAN access point according to a standard complying with an IEEE802.11.b/g standard, for example, and has a function of making a Wi-Fi communication with another appliance (server 102, for example: see Figure 6) via the Internet 110. Furthermore, the local communication module 58 has a function of making a short distance wireless communication with the game apparatus of the same kind according to a predetermined system (Bluetooth (registered trademark), ZigBee (registered trademark), Wibree (registered trademark), UWB (Ultra Wide Band), NFC (Near Field Communication), infrared rays system, etc., for example) with the same kind of apparatuses (short distance wireless communication performed between the same kind of the apparatuses utilizing the local communication module 58 is called "local communication" in this embodiment). The Wi-Fi communication module 56 and the local communication module 58 are connected by the CPU 42. The CPU 42 can transmit and receive data with another appliance (server 102, for example) via the Internet 110 by utilizing the Wi-Fi communication module 56 and can transmit and receive data with same kind of other game apparatuses by utilizing the local communication module 58.

Here, the local communication module 58 is integrated in the game apparatus 10 of this embodiment, but may be provided in the memory card 38b, for example. In this case, the CPU 42 performs a communication control via the memory card I/F 44.

Additionally, the CPU 42 is connected with the RTC 60 and the power supply circuit 46. The RTC 60 counts a time to output the same to the CPU 42. The CPU 42 can calculate a current time (date), and detects an operation timing as to when an image is to be acquired, etc on the basis of the time counted by the RTC 60. The power supply circuit 46 controls power supplied from the power supply (a battery accommodated in the lower housing) included in the game apparatus 10, and supplies the power to the respective circuit components within the game apparatus 10.

Moreover, the game apparatus 10 is provided with the microphone 32 and the speaker 34. The microphone 32 and the speaker 34 are connected to the I/F circuit 40. The microphone 32 detects a sound of the user and outputs a sound signal to the I/F circuit 40. The speaker 34 outputs a sound corresponding to the sound signal from the I/F circuit 40. The I/F circuit 40 is connected to the CPU 42. Furthermore, the touch panel 28 is connected to the I/F circuit 40. The I/F circuit 40 includes a sound controlling circuit for controlling the microphone 32 and the speaker 34, and a touch panel controlling circuit for controlling the touch panel 28. The sound controlling circuit performs an A/D conversion and a D/A conversion on a sound signal, or converts a sound signal into audio data in a predetermined format. The converted audio data is written to a sound area (not shown) of the main memory 48. If the game apparatus 10 is utilized as a recording device, the audio data stored in the sound area is written to the memory for saved data 52 via the memory controlling circuit 50 thereafter (recorded in the memory card 38a via the memory card I/F 44 as required). Furthermore, the audio data (microphone input information) stored in the sound area 80 is also utilized for various game processing. The touch panel controlling circuit generates touched position data in a predetermined format on the basis of the signal from the touch panel 28 and outputs the same to CPU 42. The touch position data indicates coordinates of a position where an input is performed on an input surface of the touch panel 28. Also, the touch panel controlling circuit performs reading of a signal from the touch panel 28 and generation of the touch position data per each predetermined time. The CPU 42 acquires the touch position data to thereby know the position where the input is made on the touch panel 28.

The operating portion 24 is made up of the aforementioned respective buttons 24a-24i, and connected to the CPU 42. The operation data indicating an input state (whether or not to be pushed) with respect to each of the operation buttons 24a-24k is output from the operation button 24 to the CPU 42. The CPU 42 executes processing according to an input to the operating portion 24 by acquiring the operation data from the operating portion 24.

The respective cameras 16 and 18 are connected to the CPU 42. The respective cameras 16 and 18 image images according to an instruction from the CPU 42, and output imaged image data to the CPU 42. The CPU 42 writes the image data from each of the cameras 16 and 18 to an image area (not shown) of the main memory 48. In a case that the game apparatus 10 is utilized as an imaging device, the image data stored in the image area is written to the memory for saved data 52 via the memory controlling circuit 50 (and moreover recorded in the memory card 38 via the memory card I/F 44 as required). Furthermore, the image data sorted in the image area can also be utilized for various game processing.

In addition, each of the LCDs 12 and 14 is connected to the CPU 42. Each of the LCDs 12 and 14 displays an image according to an instruction from the CPU 42. In a case that the game apparatus 10 is utilized as an imaging device, the CPU 42 displays an image acquired from any one of the cameras 16 and 18 on the upper LCD 14, and displays an operation screen generated according to predetermined processing on the lower LCD 12. If a game is played with the game apparatus 10, a game image is displayed on one or both of the LCD 12 and 14.

In the game apparatus 10 configured as described below, the content stored in the memory for saved data 52 can be "moved" between the same kind of game apparatuses (or its high-end model) by utilizing two kinds of the local communication and the Wi-Fi communication. The content is a software program in relation to a game and other applications. The software program is made up of a program (main body data) for executing a game and other application and save data (additional data) indicating the result of the execution or the progress of the execution by the program. The Wi-Fi communication is used at a time of moving the main body data, and the local communication is used at a time of moving the additional data. Figure 6 shows an example of the configuration of the game system 100 for performing the movement.

Referring to Figure 6, the game system 100 includes a game apparatus P (game apparatus 10P) being a source of the movement, a game apparatus Q (game apparatus 10Q) being a destination of the movement, and the server 102. Here, the game apparatuses 10P and 10Q are the same as the above-described game apparatus 10, and as to each corresponding component between both of the game apparatuses, a subscript P/Q indicating the source/destination, such as the lower LCD 12P/12Q, for example is given to the reference numeral for the sake of the identification.

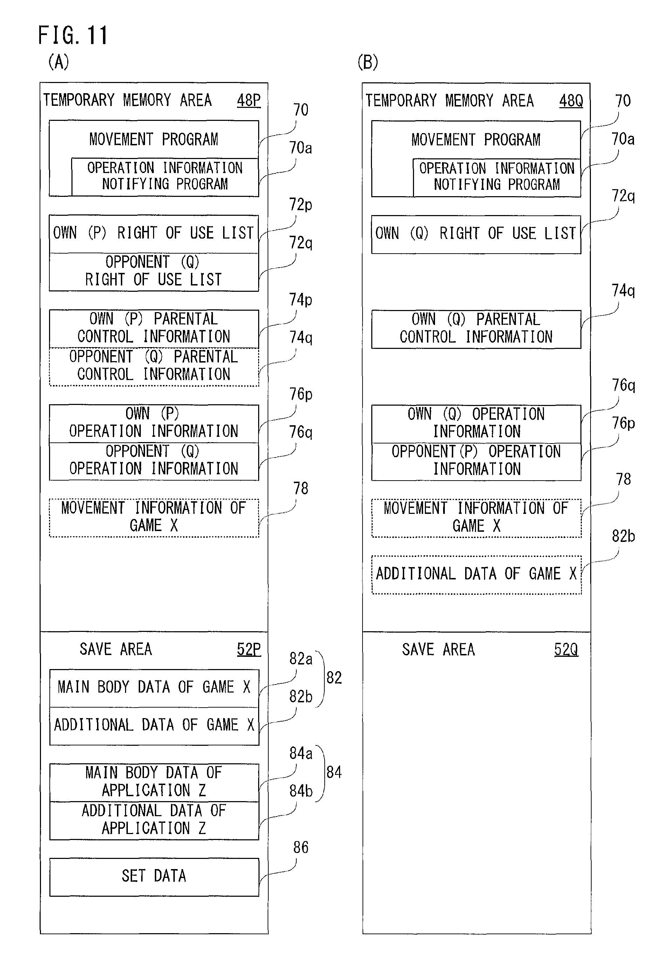

Figure 11 shows a memory map of the game apparatus 10 before performing a movement. Figure 11 (A) is a memory map of a source of the movement, that is, the side of the game apparatus 10P, and Figure 11 (B) is a memory map of a destination of the movement, that is, the side of the game apparatus 10Q.

First, as to the source of the movement, referring to Figure 11(A), in a main memory (temporary memory area) 48P, a movement program 70, an own (P) right of use list 72p, an opponent (Q) right of use list 72q, own (P) parental control information 74p, own (P) operation information 76p, and opponent (Q) operation information 76q are stored before start of a movement. In the temporary memory area 48P as well, opponent (Q) parental control information 74q is written immediately after start of the movement, and movement information of the game X is written when a game X is decided to be moved, for example.

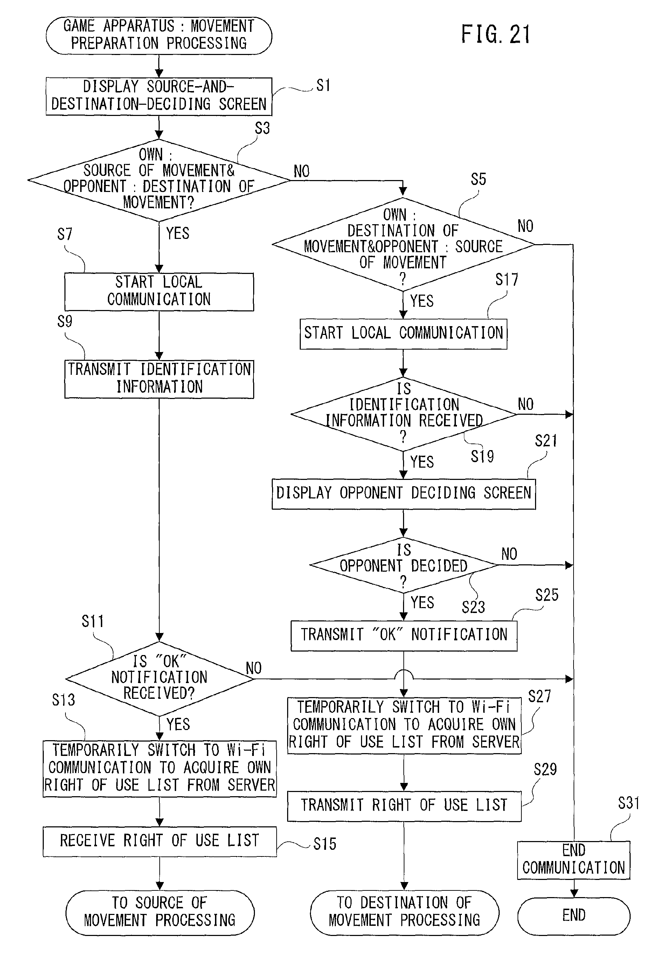

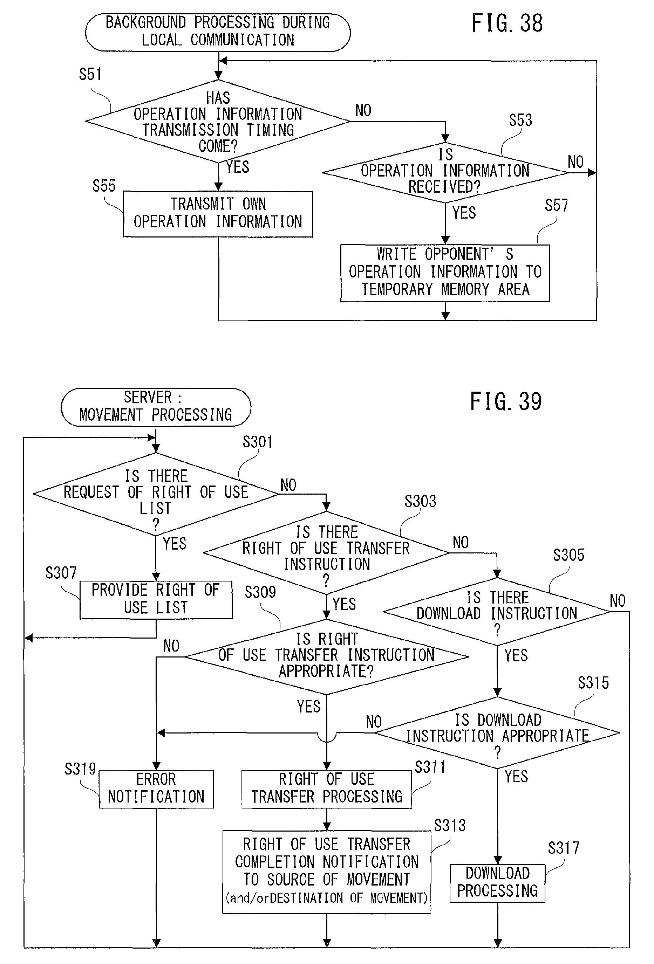

The movement program 70 is a control program for implementing the movement processing between the game apparatuses 10P and 10Q, and corresponds to a flowchart in Figure 21 to Figure 38. The movement program 70 includes an operation information notifying program 70a corresponding to the flowchart in Figure 38. The operation information notifying program 70a is a program for notifying (transmitting and receiving) the information indicating the operation content performed in the respective game apparatuses 10P and 10Q (operation information 76p and 76q) to each other.

The own (P) right of use list 72p is a list describing an ID of a content that the game apparatus 10P can use (has a right of use), and the opponent (Q) right of use list 72q is a list describing an ID of a content that the game apparatus 10Q can use (has a right of use). The own (P) parental control information 74p is information as to whether or not a parental control (the detail is described later) is set to the game apparatus 10P, and the opponent (Q) parental control information 74q is information as to whether or not a parental control is set to the game apparatus 10Q. The own (P) operation information 76p and the opponent (Q) operation information 76q are information indicating the contents of the operation respectively performed by the game apparatuses 10P and 10Q. The movement information of the game X 78 is information for identifying an object to be moved, that is, the game X, and includes a title (game ID), an icon, etc.

In a memory for saved data (save area) 52P, a software program of the game X 82, a software program of the application Z 84, and set data 86 are stored. The software program of the game X 82 includes main body data 82a and additional data 82b, and the software program of the application Z 84 includes main body data 84a and additional data 84b. Here, the main body data 82a and 84a are programs, and the additional data 82b and 84b are save data. The set data 86 is set data with respect to the main body of the game apparatus 10P.

Next, with respect to the destination of the movement, referring to Figure 11 (B), in a main memory (temporary memory area) 48Q, program, list and information (70-78) similar to the side of the game apparatus 10P except for the opponent (P) right of use list 72p (here, the identifier p and q are opposite to that of the game apparatus 10P) are stored before the movement. In the temporary memory area 48Q, after the movement, additional data 82b of the game X is stored. In the memory for saved data (save area) 52Q, data has not yet been stored.

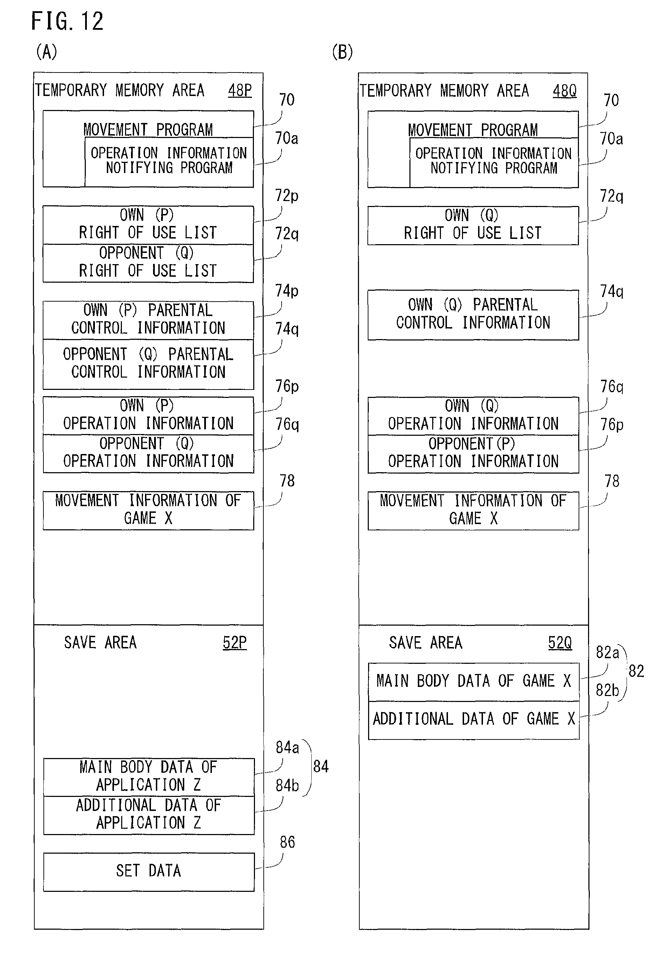

Although the detail is described later, the memory map in Figure 11 changes as in Figure 12 after the application X is moved. First, as to the source of the movement, with reference to Figure 11 (A) and Figure 12(A), the software program of the game X 82 (main body data 82a and additional data 82b) is erased from the save area 52P. Next, with respect to the destination of the movement, with reference to Figure 11 (B) and Figure 12(B), the software program of the game X 82 (main body data 82a and additional data 82b) is newly stored in the save area 52Q. The additional data 82b of the game X newly stored in the save area 52Q is moved from the temporary memory area 48Q.

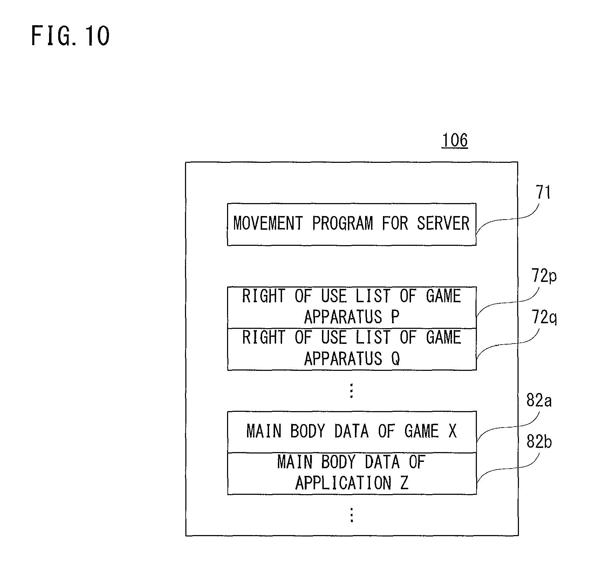

The server 102 is provided with a CPU 104, a memory 106, a Wi-Fi communication module 108, etc., and can perform a Wi-Fi communication with each of the game apparatuses 10P and 10Q via the Internet 110. In the memory 106, as shown in Figure 10, the right of use lists 72p and 72q respectively corresponding to the game apparatuses 10P and 10Q and the main body data 82a and 82b respectively corresponding to the game X and the application Z are stored.

In the memory for saved data 52P (save area) of the game apparatus 10P, as shown in Figure 11 (A), the main body data 82a and the additional data 82b corresponding to the software program of the game X 82, that is, the game X, the main body data 84a and the additional data 84b corresponding to the software program of the application Z 84, that is, the application Z, and the set data 86 are stored at first. Here, the main body data 82a and 84a stored in the game apparatus 10P are the same as the main body data 82a and 84a stored in the server 102. The set data 86 is data indicating the setting of the game apparatus 10P itself (user name, user color, the time, etc., for example). On the other hand, in the memory for saved data 52Q on the side of the game apparatus 10Q, data is not stored yet at first as shown in Figure 11(B).

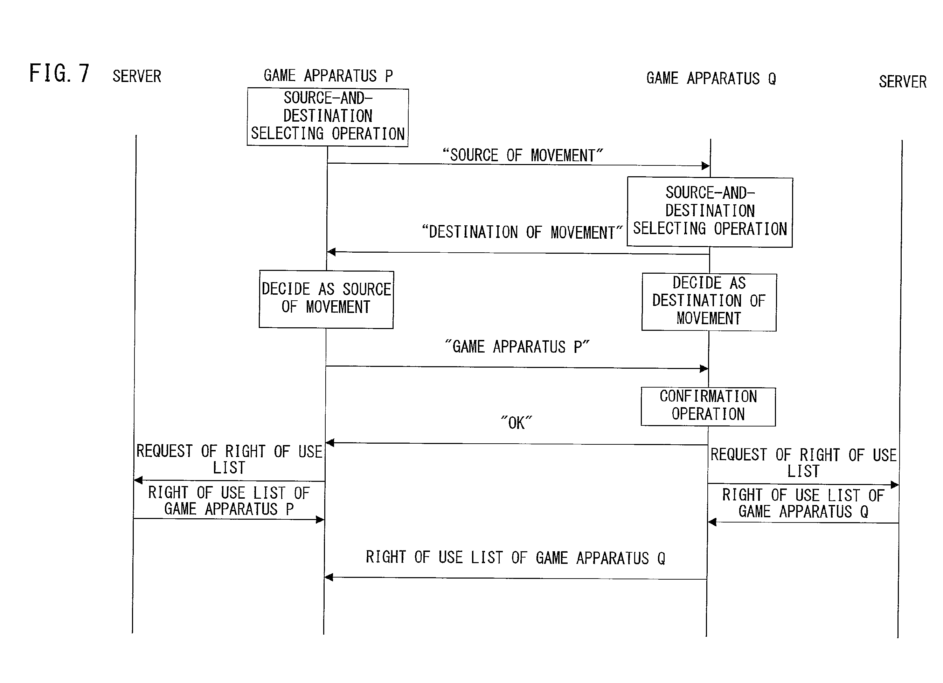

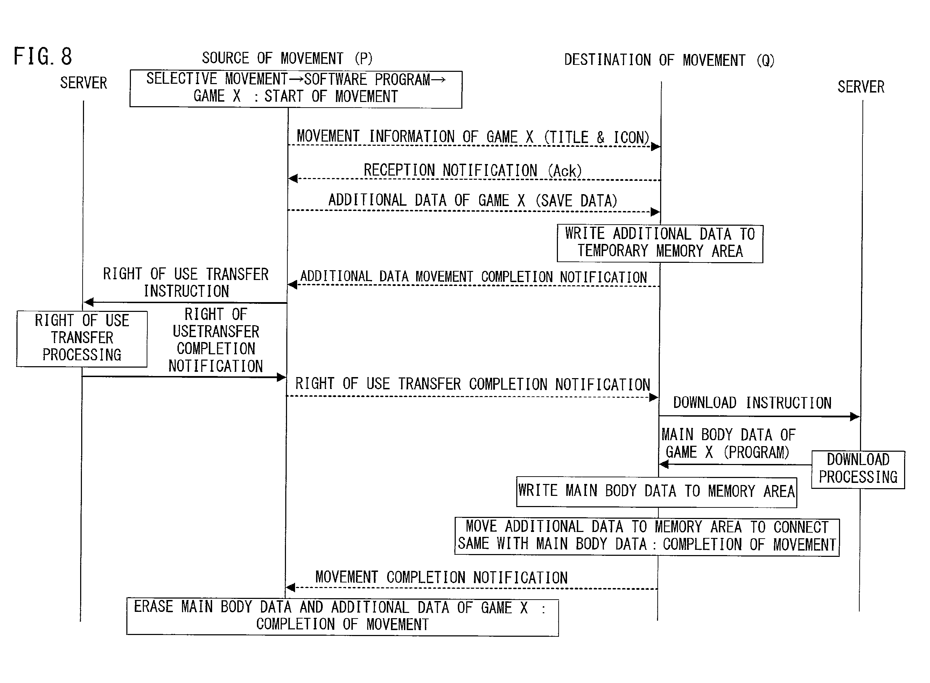

For example, in a case that the software program of the game X 82 stored in the game apparatus 10P is moved to the game apparatus 10Q, a communication according to sequences shown in Figure 7 and Figure 8 is performed in the game system 100. The sequence in Figure 7 is equal to movement preparation processing through which the source of the movement and the destination of the movement are decided, and the right of use list (72q) of the destination of the movement is notified to the source of the movement.

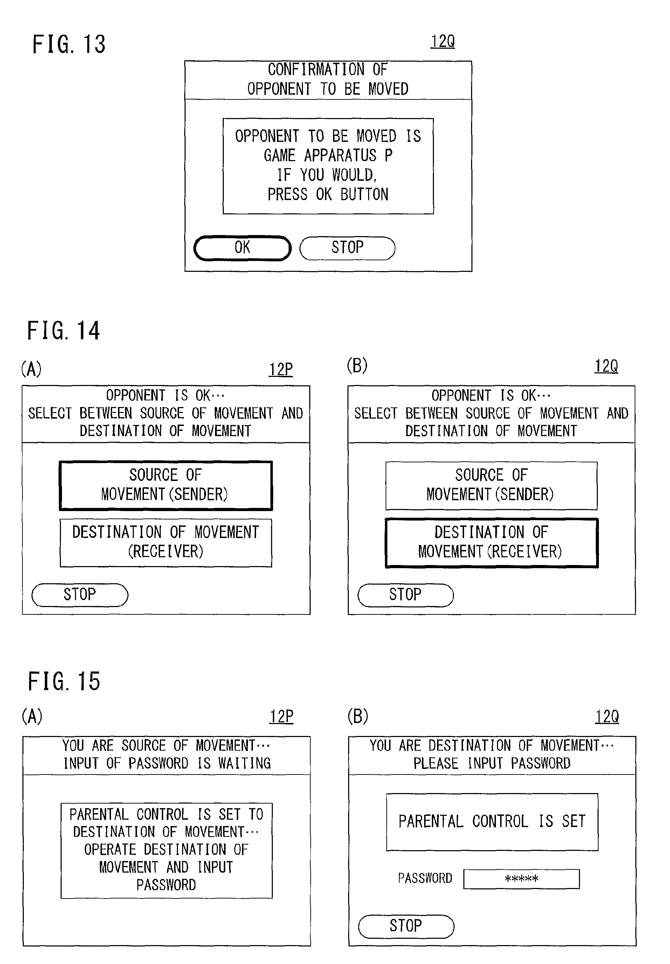

Each of the game apparatuses 10P and 10Q accepts a source-and-destination selecting operation on a source-and-destination-deciding screen as shown in Figure 14(A) and Figure 14(B), and notify own selection to each other. Thus, the game apparatus 10P is decided as the "source of the movement", and the game apparatus 10Q is decided as the "destination of the movement". Next, a local communication is executed to transmit the identification information of the source of the movement, that is, the "game apparatus P" to the destination of the movement. The destination of the movement, that is, the game apparatus 10Q displays a confirmation screen (see Figure 13) for confirming that the source of the movement is the game apparatus P to accept a confirmation operation, and notifies "OK" to the source of the movement, that is, the game apparatus 10P.

Thereafter, each of the game apparatuses 10P and 10Q makes a Wi-Fi communication to acquire the own right of use list (72p, 72q) from the server 102. Then, the destination of the movement, that is, the game apparatus 10Q notifies the own right of use list (72q) to the source of the movement, that is, the game apparatus 10P by making a local communication. Thus, when the source of the movement has both of the lists, a determination as to whether movable or not can be made.

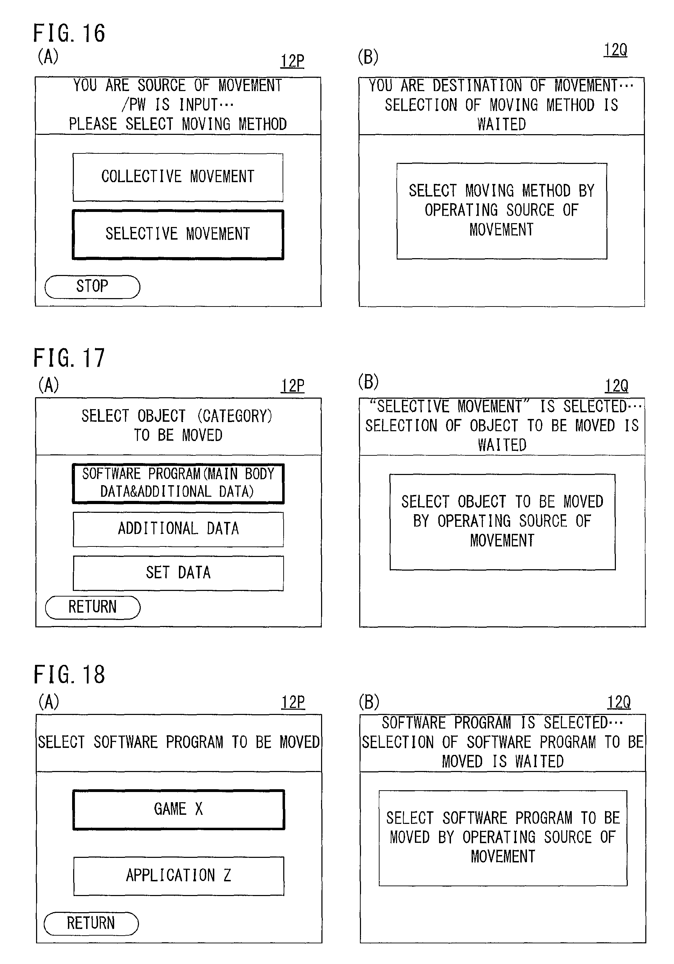

Next, after the process shifts to the sequence in Figure 8, the game apparatus 10P being the source of the movement accepts a series of selecting operations, such as "selective movement"→ "software"→ "game X", for example, through a series of selection screens as shown in Figure 16(A), Figure 17(A) and Figure 18(A) to start to move the game X. The game apparatus 10P first generates the movement information of the game X 78 (see Figure 11 (A)) to transmit the same to the game apparatus 10Q. In the movement information 78, the title and the icon of the game X, etc. are included. When a receipt notification (Ack, etc.) is returned in response thereto, the game apparatus 10P then transmits the additional data (save data, etc.) of the game X. The game apparatus 10Q receives the additional data to write the same in the main memory 48 (temporary memory area), and transmits an additional data movement completion notification. Here, the additional data exceeding the main memory 48 is temporarily stored in the memory for saved data 52Q, and then adequately captured in the main memory 48.

When receiving the additional data movement completion notification, the game apparatus 10P switches from the local communication to the Wi-Fi communication to instruct the server 102 to transfer the right of use of the game X from the game apparatus 10P to the game apparatus 10Q. The server 102 updates the right of use lists 72p and 72q of the game apparatuses 10P and 10Q to execute the instructed right of use transfer processing, and transmits the right of use transfer completion notification to the game apparatus 10P. When receiving the right of use transfer completion notification from the server 102, the game apparatus 10P switches from the Wi-Fi communication to the local communication to transfer a right of use transfer completion notification to the game apparatus 10Q.

When receiving the right of use transfer completion notification from the game apparatus 10P, the game apparatus 10Q switches from the local communication to the Wi-Fi communication to instruct the server 102 to download the game X, The server 102 downloads the main body data of the game X 82a into the game apparatus 10Q.

After completion of downloading the main body data of the game X 82a from the server 102, the game apparatus 10Q switches from the Wi-Fi communication to the local communication, and writes the downloaded main body data of the game X 82a into the memory for saved data 52Q. Next, the game apparatus 10Q moves the main body data of the game X 82a temporarily stored in the main memory 48Q to the memory for saved data 52Q to connect (unify) with the main body data of the game X 82a, and transmits a movement completion notification to the game apparatus 10P.

When receiving the movement completion notification from the game apparatus 10Q, the game apparatus 10P erases the main body data of the game X 82a and the additional data 82b from the memory for saved data 52P. Thus, the movement of the game X is completed. Here, the software program of the application Z 84 can be moved as described above.

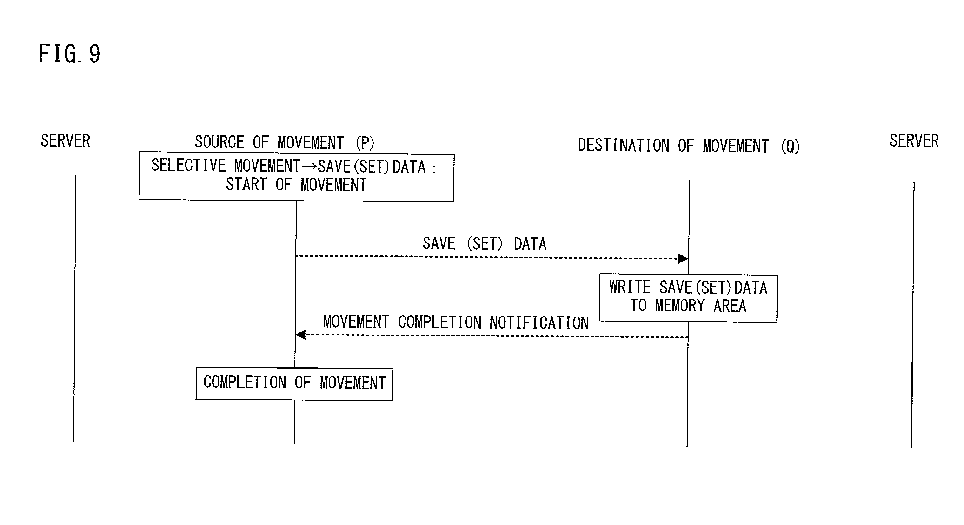

In a case that the main body data of the game X 82a has already been stored in the game apparatus 10Q, only the additional data 82b of the game X can be moved according to a communication sequence in Figure 9. More specifically, when the "additional data" is selected on the selection screen in Figure 17(A), the game apparatus 10P transmits the save data (the additional data 82b of the game X, here) to the game apparatus 10Q. The game apparatus 10Q writes the save data received from the game apparatus 10P to the main memory 48Q, and transmits a movement completion notification to the game apparatus 10P. When the game apparatus 10P receives the movement completion notification from the game apparatus 10Q, the movement of the save data is completed. Here, when the game apparatus 10P receives the movement completion notification from the game apparatus 10Q, some save data may be erased from the memory for saved data 52P.

Here, the communication sequence in Figure 9 can be applied to the movement of the set data 86. Specifically, when the "set data" is selected on the selection screen shown in Figure 17(A), the set data 86 is transmitted from the game apparatus 10P to the game apparatus 10Q. The game apparatus 10Q writes the set data received from the game apparatus 10P to the main memory 48Q, and transmits a movement completion notification to the game apparatus 10P. When the movement completion notification is received by the game apparatus 10P, the movement of the set data 86 is completed.

Furthermore, when the "collective movement" is selected on the selection screen shown in Figure 16(A), the communication sequences shown in Figure 7-Figure 9 are subsequently executed, and whereby, the software program, the save data and the set data can collectively be moved.

When the "movement" as described above is performed, the CPU 42P of the game apparatus 10P and the CPU 42Q of the game apparatus 10Q execute processing according to flowcharts shown in Figure 21-Figure 38 on the basis of the movement program 70 and the various information 72-78 (the detail is described before) shown in Figure 11 (A) and Figure 11(B) (or Figure 12(A) and Figure 12(B)). Here, the operation information notifying processing corresponding to the flowchart in Figure 38, that is, the operation information notifying program 70a is executed as background processing (that is, in parallel) of the main processing shown in Figure 21-Figure 37.

On the other hand, the memory 106 of the server 102 stores the movement program for server 71, and the CPU 104 executes processing according to the flowchart in Figure 39 on the basis of the movement program 71.

The users arrange the game apparatuses 10P and 10Q at places where a local communication is allowable, and perform an activating operation of the movement program 70. The CPUs 42P and 42Q first execute the in Figure 21 according to the movement program 70.

Referring to Figure 21, the CPUs 42P and 42Q respectively display source-and-destination-deciding screens shown in Figure 14(A) and Figure 14(B) on the LCDs 12P and 12Q in a step S1. In a step S3, it is determined whether the own and opponent selections are the source of the movement or the destination of the movement, and if "NO" here, each of the own and opponent's selections is whether the destination of the movement or the source of the movement. If "NO" here, that is, if both the own and opponent's selection are the source of the movement, or the destination of the movement, the communication is ended in a step S31 to complete the flowchart. Here, an explanation is made such that the game apparatus 10P becomes the source of the movement, and the game apparatus 10Q becomes the destination of the movement.

Next, the CPUs 42P and 42Q start a local communication in steps S7 and S 17. More specifically, the CPUs 42P and 42Q detect each-other's opponents via a detection signal such as a beacon, etc., and establish a local connection with the detected opponent by the local communication modules 58P and 58Q. Thereafter, the CPU 42P transmits the own identification information to the opponent in a step S9, and the CPU 42Q determines whether or not the identification information of the opponent is received in a step S 19. If "NO" here, the CPU 42Q ends the communication in the step S31 to end this flowchart.

If "YES" in the step S 19, the CPU 42Q proceeds to a step S21 to display an opponent deciding screen shown in Figure 13 on the LCD 12Q to determine whether or not a deciding operation is performed in a step S23. On the opponent deciding screen, a dialogue to prompt the player to decide the opponent to be moved is the game apparatus 10P, an "OK" button, and a "stop" button are displayed. When the "OK" button is operated on the side of the game apparatus 10Q, the CPU 42Q determines "YES" in the step S23, and proceeds to a step S25 to transmit an "OK" notification to the opponent. When the "stop" button is operated on the side of the game apparatus 10Q, the CPU 42Q determines "NO" in the step S23, ends the communication in the step S31 to end the flowchart.

On the other hand, after transmitting the identification information in the aforementioned step S9, the CPU 42P waits for an "OK" notification from the game apparatus 10Q, and determines whether or not an "OK" notification is received in a step S 11. If "NO" here, the process proceeds to the step S31 to end the communication, and end this flowchart. If "YES" in the step S 11, the process proceeds to a step S 13.

When the "OK" notification is transmitted and received between the game apparatuses 10P and 10Q, the CPU 42P and 42Q temporarily switch to the Wi-Fi communication in the step S 13 and S27, respectively, and acquires the own right of use list (72p, 72q) from the server 102 and write it to the main memories 48P and 48Q. At this time, in the right of use list 72p, two rights of use, such as the software program of the game X 82 and the software program of the application Z 84 are registered, but in the right of use list 72q, no right of use is registered. Here, the writing is overwriting, and the right of use list which has already been stored is updated by overwriting.

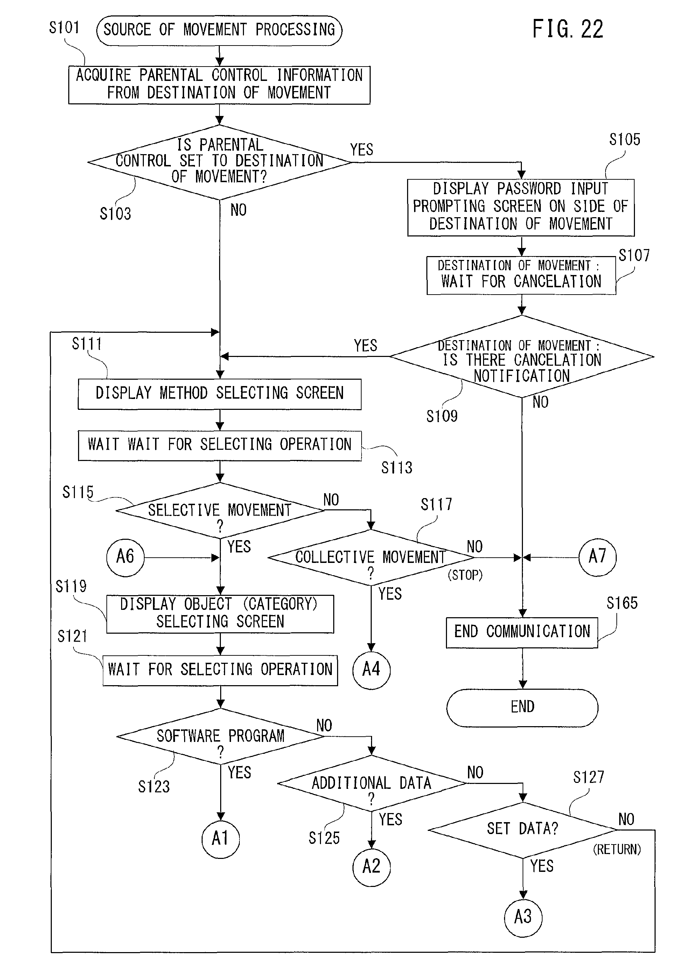

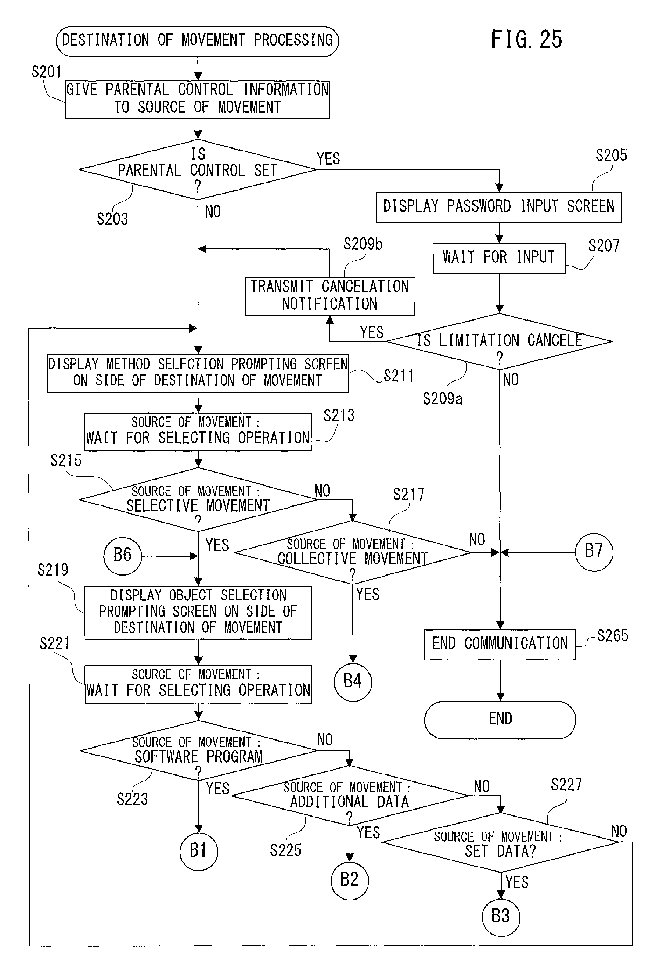

Thereafter, the CPU 42Q transmits the own right of use list 72q to the opponent in a step S29, and proceeds to processing of the destination of the movement shown in Figure 25-Figure 27, Figure 29, Figure 31 and Figure 35-Figure 37. The CPU 42P receives the opponent right of use list 72q in a step S 15, and writes the same in the main memory 48P. Then, the process proceeds to the processing of the destination of movement in Figure 22-Figure 24, Figure 28, Figure 30 and Figure 32-Figure 34.

Here, during the local communication, the CPUs 42P and 42Q periodically execute the background processing shown in Figure 38 on the basis of the operation information notifying program 70a to thereby notify the own latest operation information (76p and 76q) temporarily stored in the main memories 48P and 48Q (temporary memory area) to each other.

Specifically, referring to Figure 38, the CPU 42P and 42Q determine whether or not a timing of transmitting the own operation information stored in the temporary memory area to the opponent has come in a step S51, and if "NO", the process proceeds to a step S53 to determine whether or not the operation information of the opponent is received by the local communication modules 56P and 56Q, and if "NO" here, the process returns to the step S51. If "YES" in the step S51, the own operation information is transmitted to the opponent by the local communication modules 56P and 56Q in a step S55, and the process returns to the step S51. If "YES" in the step S53, the operation information of the opponent is written to the temporary memory area in a step S57, and the process returns to the step S51. Thus, on the basis of the operation information (76p or 76q) of the opponent repetitively written to the temporary memory area, the CPUs 42P and 42Q can know what operation is performed on the side of the opponent.

Here, in this embodiment, the local connection is basically performed and switched to the Wi-Fi connection as necessary, but in place of this, the local connection is always established, and the Wi-Fi connection may further be established as necessary, and both of the connections can always be established.

Figure 11 (A) and Figure 11(B) described before are the memory maps of the game apparatuses 10P and 10Q at a time when a decision is made as to whether the source of the movement or the destination of the movement. Referring to Figure 11 (A), in the main memory 48P (temporary memory area), the movement program 70, the own (P) right of use list 72p, the opponent (Q) right of use list 72q, the own (P) parental control information 74p, the own (P) operation information 76p and the opponent (Q) operation information 76q are stored. In the memory for saved data 52P (save area), the software program of the game X 82, the software program of the application Z 84, and the set data 86 are stored. Referring to Figure 11 (B), in the main memory 48Q (temporary memory area), the movement program 70, the own (Q) right of use list 72q, the opponent (P) right of use list 72p, the own (Q) parental control information 74q, the own (Q) operation information 76q, the opponent (P) operation information 76p, etc. are stored. In the memory for saved data 52Q (save area), data is not yet stored.

Generally, the parental control is a function to limit by a guardian a purchase and a use of a content by a child. Specifically, a function of limiting a movement of a software program to the game apparatus 10 (writing to the save area) by a password is called a parental control. The parental control information 74p and 74q are respectively information indicating that a parental control is set to the game apparatuses 10P and 10Q. For example, in a case that the parental control is set to the game apparatus 10Q, moving a software program to the game apparatus 10Q has to be performed after a password is directly input to the game apparatus 10Q in order to cancel the restriction.

Here, as to the movement program 70, the communication controlling program 70a included therein, the information other than the parental control (72, 76, 78), the software program (82, 84), the main body data (82a, 84a) and the additional data (82b, 84b) constructing thereof, and the set data 86 are explained before, and therefore, the detailed explanation is omitted.

With first reference to Figure 22 and Figure 25, the CPU 42P acquires the parental control information 74q from the destination of the movement in a step S101 while the CPU 42Q gives the parental control information 74q to the source of the movement in a step S201. Thus, in the temporary memory area (see Figure 11 (A)) of the game apparatus 10P, the opponent (Q) parental control information 74q is additionally stored.

Next, the CPU 42P determines whether or not a parental control is set to the destination of the movement on the basis of the opponent (Q) parental control information 74q in a step S 103, and if "NO" here, the process proceeds to a step S111. If "YES" in the step S103, the process shifts to a step S105 to display a password input prompting screen on the side of the destination of the movement shown in Figure 15(A) on the LCD 12P, and in a step S107, a cancelation of the limitation on the side of the destination of the movement is waited. Then, in a step S109, it is determined whether or not there is a cancelation notification from the destination of the movement, and if "NO" here, the process proceeds to a step S165 while if "YES", the process proceeds to the step S111.

On the other hand, the CPU 42Q determines whether or not a parental control is set on the basis of the own (Q) parental control information 74q in a step S203, and if "NO" here, the process proceeds to a step S211. If "YES" in the step S203, the process shifts to a step S205 to display a password input screen as shown in Figure 15(B) on the LCD 12Q, and an input is waited in a step S207. Then, in a step S209a, it is determined whether or not a limitation is canceled by the input password, and if "NO" here, the process proceeds to a step S265 while if "YES", the cancelation notification is transmitted to the source of the movement in a step S209b, then, the process proceeds to the step S211.

Here, checking the setting of the parental control as described above may be performed once at activation (movement preparation processing shown in Figure 21, for example). This eliminates a necessity of concerning for the parental control of the opponent to be moved. In this case, after start of the movement, the parental control information (74q and 74q) need not be stored in the temporary memory area (48P and 48Q), and therefore, these may be erased from the memory map in Figure 11 and Figure 12.

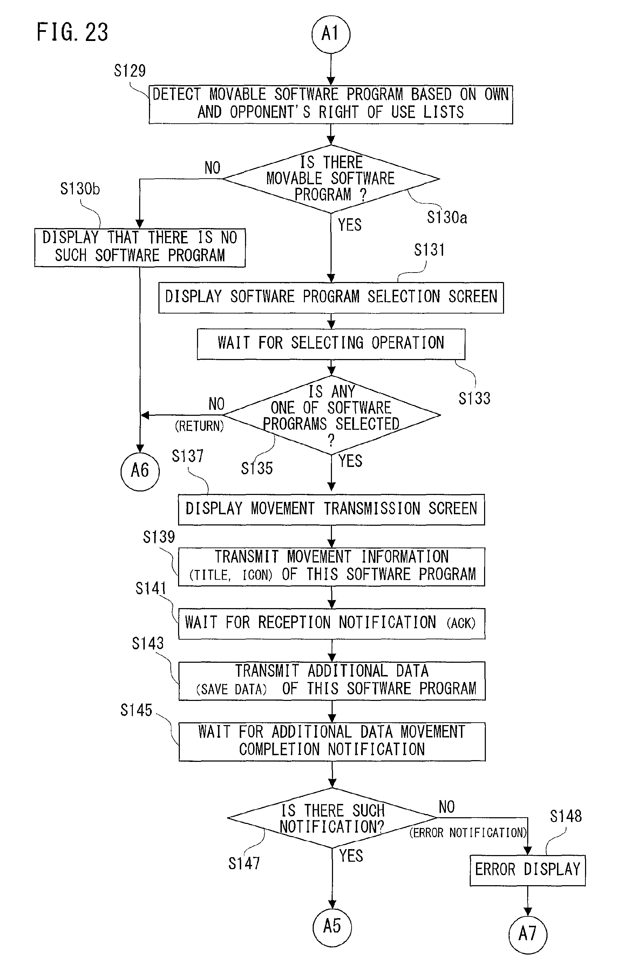

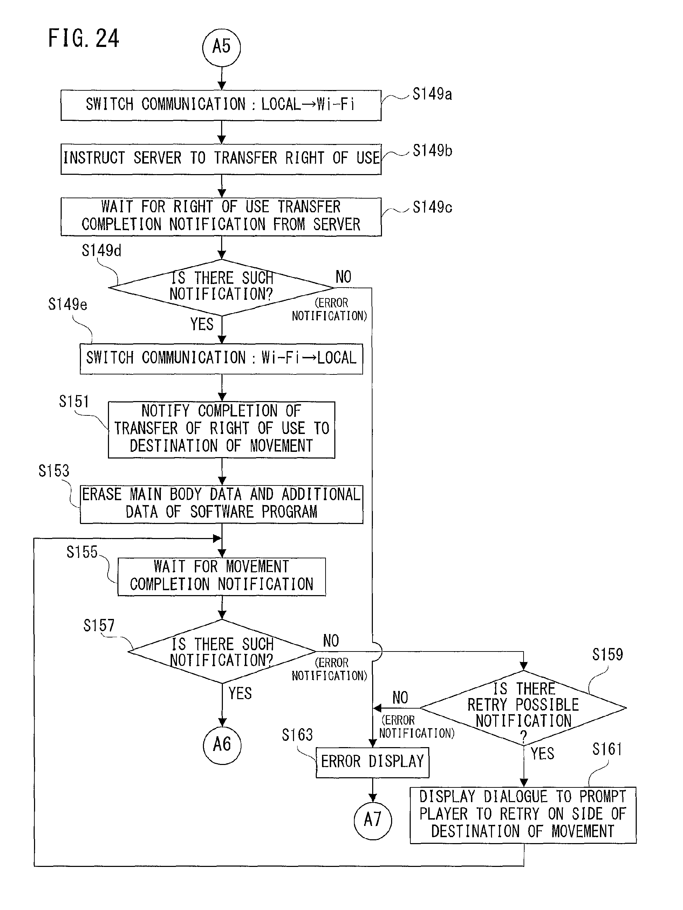

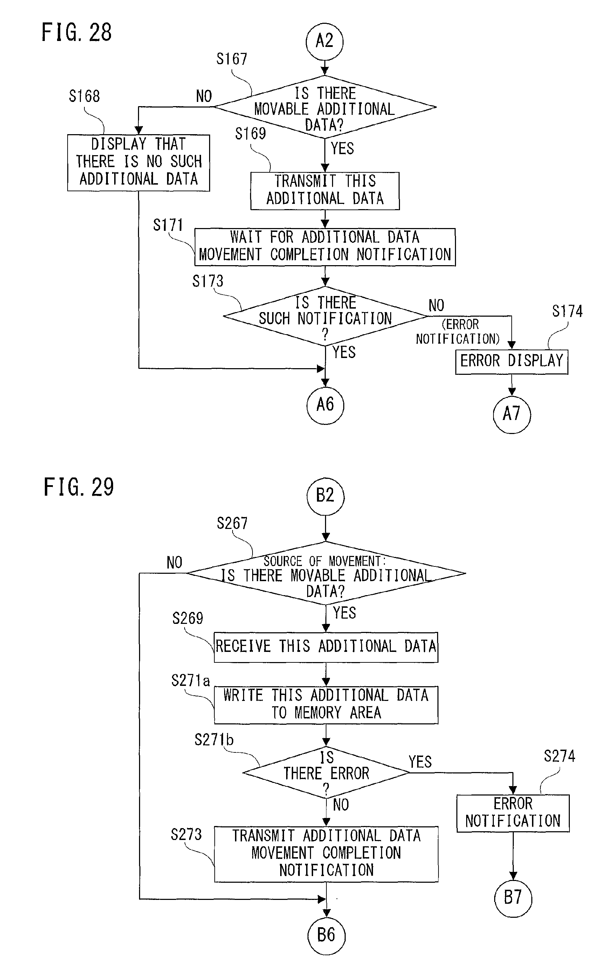

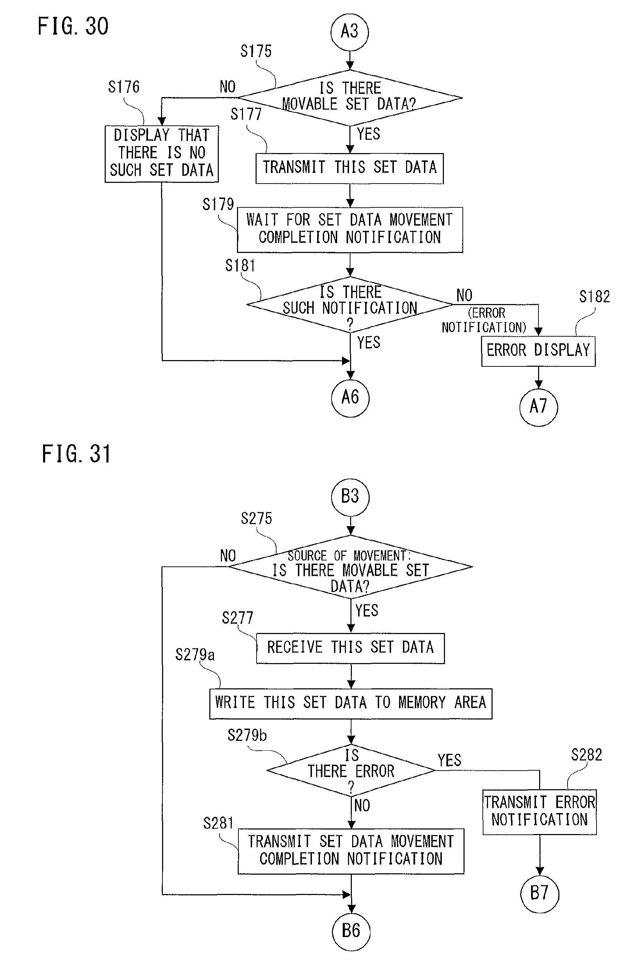

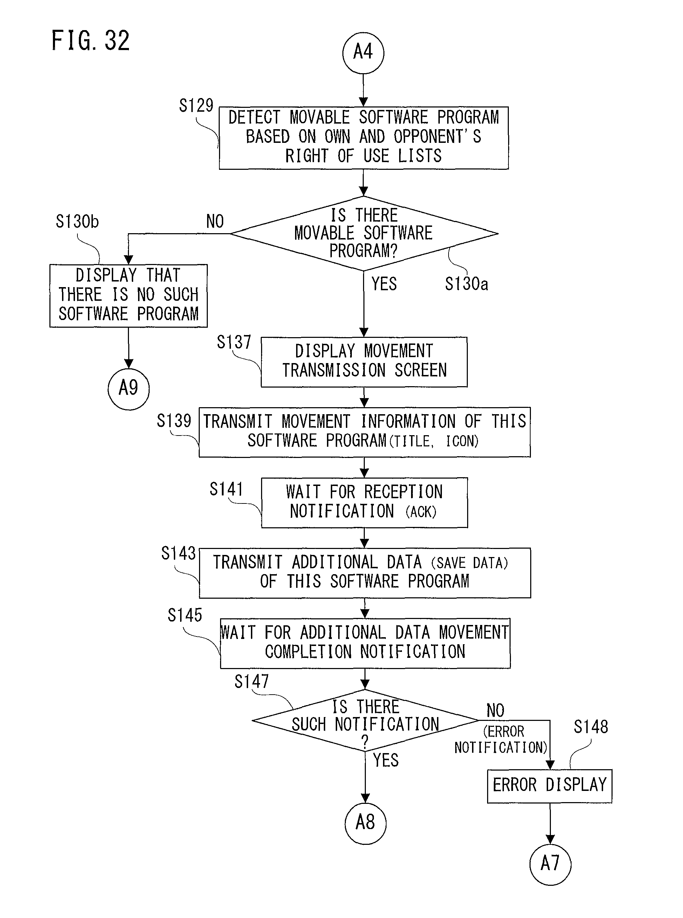

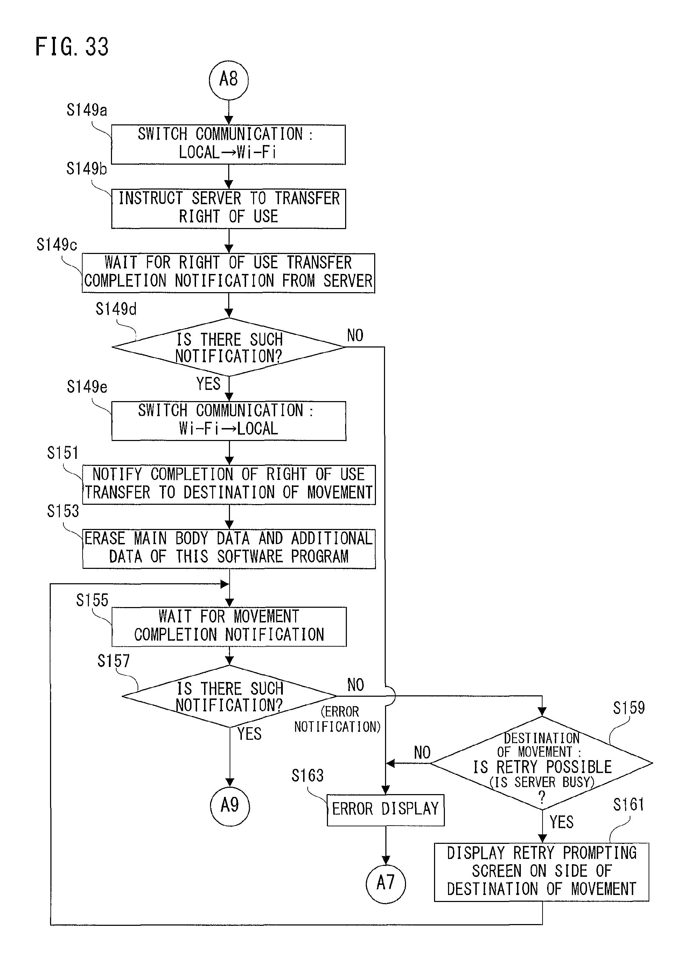

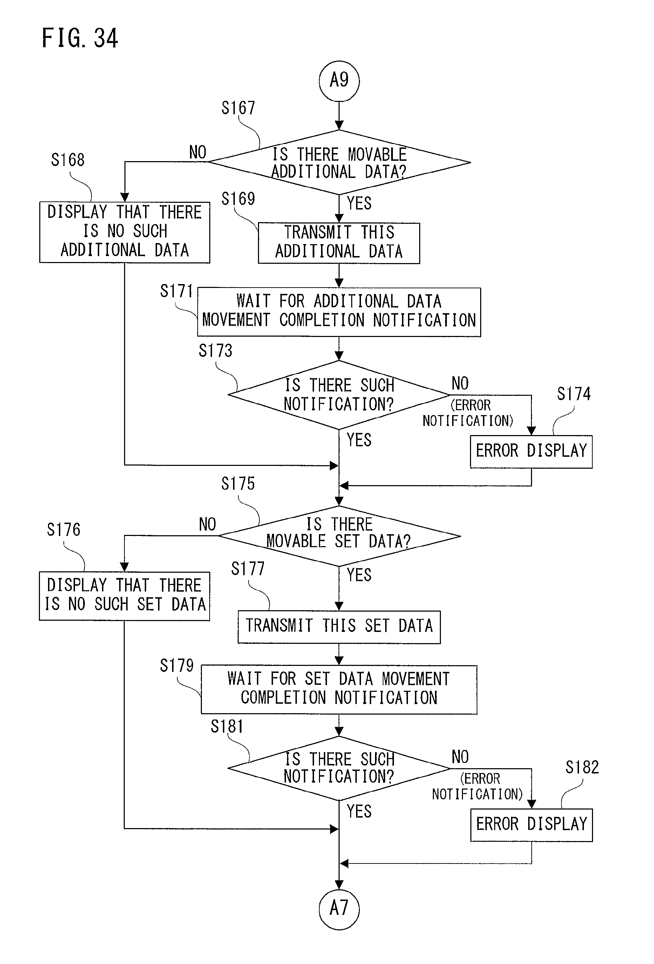

Next, the CPU 42P displays a method selection screen as shown in Figure 16(A) on the LCD 12P in the step S111, and waits for a selecting operation in a step S 113. Then, in a step S115, it is determined whether or not a "selective movement" is selected, if "NO" here, the process shifts to a step S 117 to further determine whether or not a "collective movement" is selected. If "NO" here, that is, if a "stop" is selected, the processing is ended through the communication end processing in the step S165. If "YES" in the step S 115, that is, if the "selective movement" is selected, through an object (category) selection in steps S 119-S127, a movement of the software program in steps S129-S163 shown in Figure 23 and Figure 24, a movement of the additional data in steps S 167-S 174 shown in Figure 28, and a movement of the set data in steps S175-S182 shown in Figure 30 are selectively executed (by an individual operation). On the other hand, if "YES" in the step S 117, that is, if the "collective movement" is selected, a movement of the software program in steps S129-S163 shown in Figure 32 and Figure 33, a movement of the additional data in steps S167-S174 shown in Figure 34, and a movement of the set data in steps S175-S182 shown in similar Figure 34 are collectively executed (by a single operation).

More specifically, if "YES" in the step S 115, the process proceeds to the step S 119 to display an object (category) selection screen as shown in Figure 17(A) on the LCD 12Q, and a selecting operation is waited in the step S121. Then, in the step S 123, it is determined whether or not the "software" is selected, and if "NO" here, the process shifts to the step S 125 to determine whether or not the "save data" is selected, and if "NO" here as well, the process shifts to the step S 127 to determine whether or not the "set data" is selected, and if "NO" here as well, that is, if the "return" button is selected, the process returns to the step S111. If "YES" in the step S 123, the process proceeds to the step S 129 in Figure 23, and if "YES" in the step S125, the process proceeds to the step S167 in Figure 28, and if "YES" in the step S127, the process proceeds to the step S 175 in Figure 30.

Here, the determination in each of the aforementioned steps S115, S117, S123, S125 and S127 is based on the own (P) operation information 76p (see Figure 11 (A)) stored in the main memory 48P.

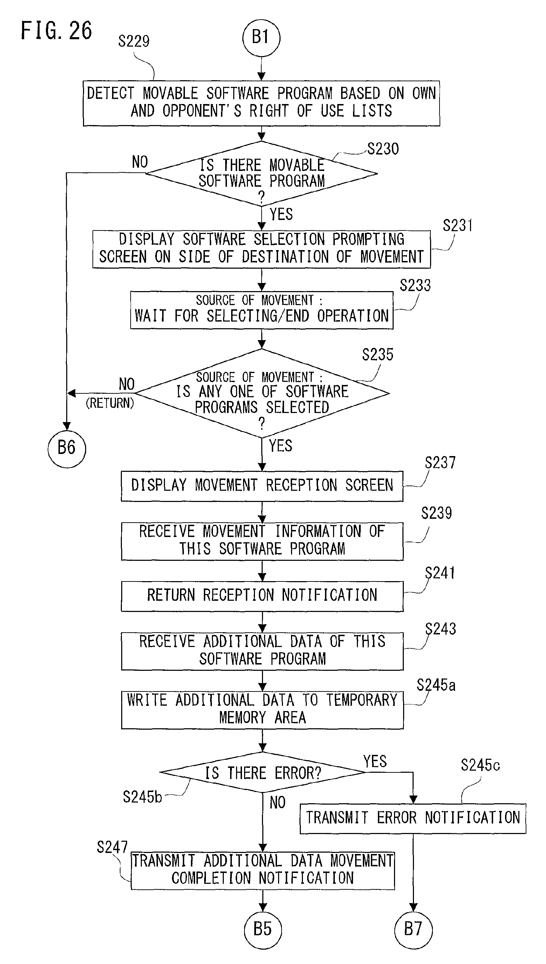

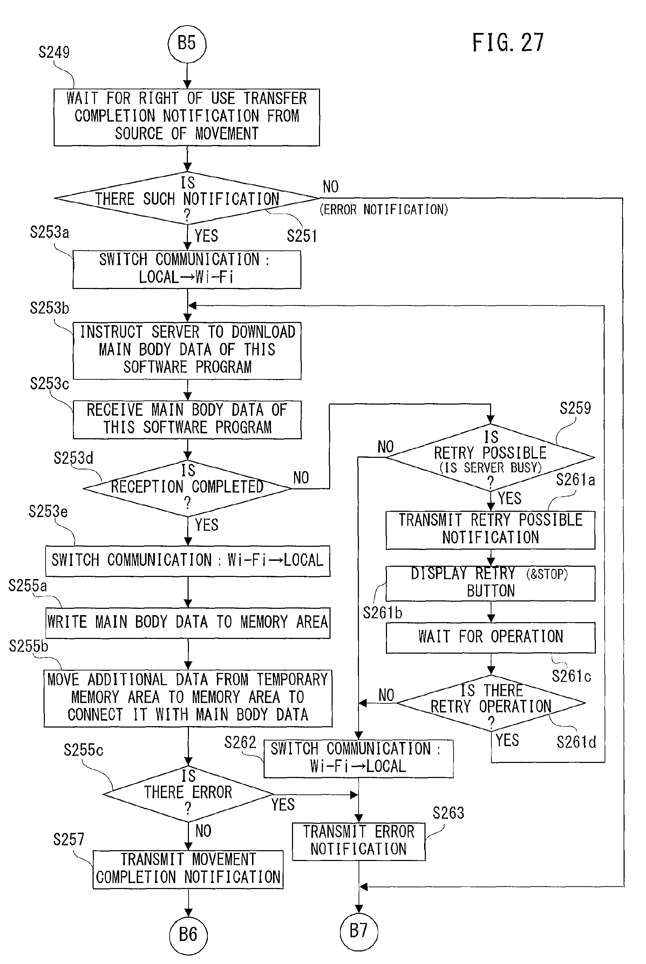

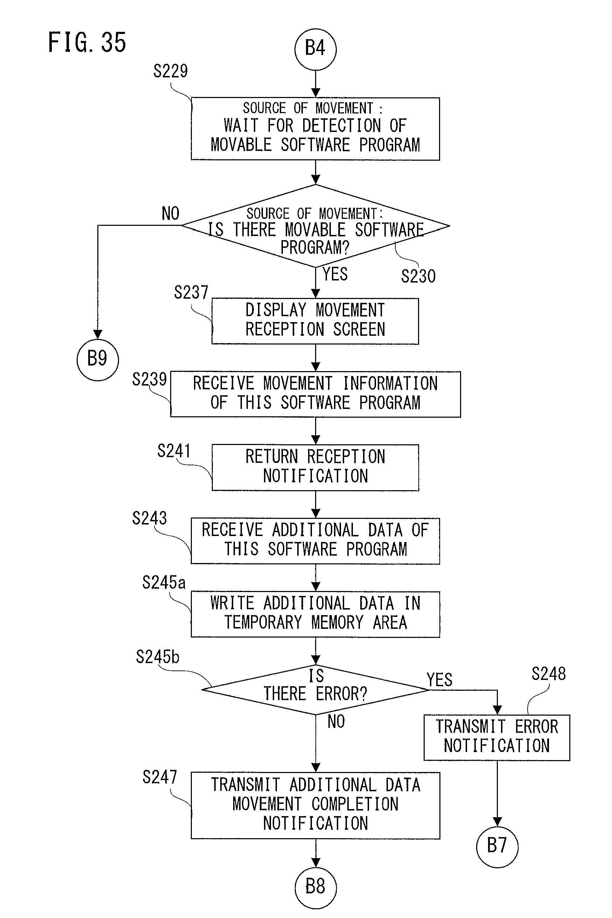

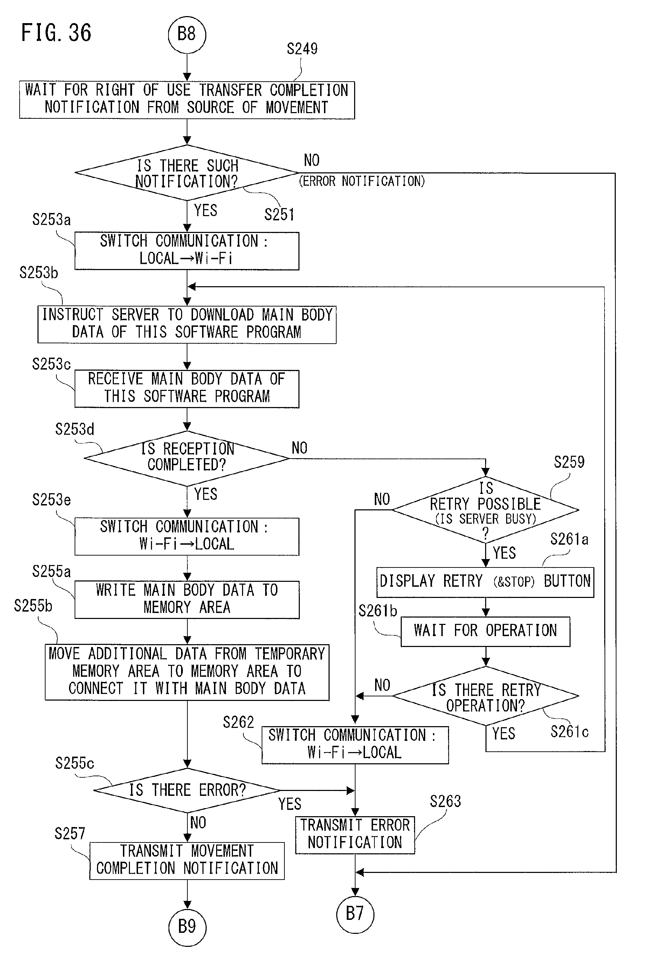

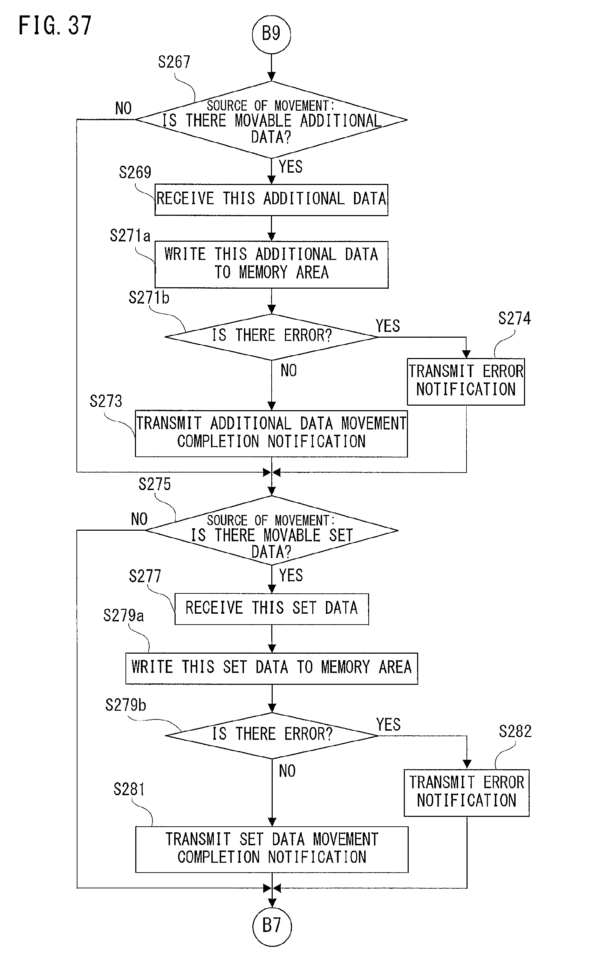

On the other hand, the CPU 42Q displays a method selection prompting screen on the source of the movement as shown in Figure 16(B) on the LCD 12Q in the step S211, and a selecting operation on the side of the source of the movement is waited in a step S213. Then, in a step S215, it is determined whether or not the "selective movement" is selected on the side of the source of the movement, and if "NO" here, the process shifts to a step S217 to further determine whether or not a "collective movement" is selected on the side of the source of the movement, and if "NO" here, that is, if the "stop" is selected on the side of the source of the movement, the process proceeds to a step S265. If "YES" in the step S215, that is, if the "selective movement" is selected on the side of the source of the movement, through the object (category) selection in steps S219-S227, the movement of the software program in steps S229-S263 shown in Figure 26 and Figure 27, the movement of the additional data in steps S267-S274 shown in Figure 28, and the movement of the set data in steps S275-S282 shown in Figure 31 are selectively executed (by an individual operation on the side of the source of the movement). On the other hand, if "YES" in the step S217, that is, if the "collective movement" is selected, the movement of the software program in steps S229-S263 shown in Figure 35 and Figure 36, the movement of the additional data in steps S267-S274 shown in Figure 37, and the movement of the set data in steps S275-S282 in Figure 37 are collectively executed (by a single operation on the side of the source of the movement).

More specifically, if "YES" in the step S215, the process proceeds to the step S219 to display an object (category) selection prompting screen on the side of the destination of the movement as shown in Figure 17(B) on the LCD 12Q, and a selecting operation on the side of the source of the movement is waited in the step S221. Then, in the step S223, it is determined whether or not the "software" is selected on the side of the source of the movement, if "NO" here, the process shifts to the step S225 to further determines whether or not the "save data" is selected on the side of the source of the movement, and if "NO" here as well, the process shifts to the step S227 to further determine whether or not the "set data" is selected on the side of the source of the movement. Then, if "NO" here as well, that is, if the "return" is selected on the side of the source of the movement, the process returns to the step S211.

Here, the determination in each of the steps S215, S217, S223, S225 and S227 is based on the opponent (P) operation information 76p (see Figure 11 (B)) stored in the main memory 48Q.

Next, processing when the "software" is selected as an object to be moved (category) is explained. In this case, the CPU 42P executes the steps S 129-S 163 in Figure 23 and Figure 24, and the CPU 42Q executes the steps S229-S263 in Figure 26 and Figure 27.

First, referring to Figure 23 and Figure 26, the CPU 42P detects a movable software program on the basis of the opponent (P) right of use list 72p and the own (Q) right of use list 72q in the step S129 while the CPU 42Q detects a movable software program on the basis of the own (Q) right of use list 72q and the opponent (P) right of use list 72p in the step S229. More specifically, the CPU 42P detects the software program that is registered in the own (P) right of use list 72p, but is not registered in the opponent (Q) right of use list 72q as a movable software program, and the CPU 42Q detects the software program that is registered in the opponent (P) right of use list 72p, but is not registered in the own (Q) right of use list 72q as a movable software program. Here, in the right of use list 72p, two rights of use, such as the software program of the game X 82 and the software program of the application Z 84 are registered while no right of use is registered in the right of use list 72q, and therefore, the software program of the game X 82 and the software program of the application Z 84 are detected as movable software programs.

Next, the CPU 42P determines whether or not there is a movable software program on the basis of the detection result in the step S 129 in the step S130a, and if "NO", "there is no relevant software program" is displayed in the step S130b, and then, the process returns to the step S 119 in Figure 22. Here, the software program of the game X 82 and the software program of the application Z 84 are detected as movable software programs, and therefore, "YES" is determined in the step S130a, and the process proceeds to the step S 131. In the step S 131, the software selection screen as shown in Figure 18(A) is displayed, and a selecting operation is waited in the step S133. Then, in the step S135, it is determined whether or not any one of the software programs is selected, and if NO here, that is, if the "return" is selected, the process returns to the step S119. If "YES" in the step S135, the process proceeds to the step S137. Here, the "game X" shall be selected.

On the other hand, the CPU 42Q determines whether or not there is a movable software program on the basis of the detection result in the step S229 in the step S230, and if "NO", the process returns to the step S219 in Figure 25. Here, the software program of the game X 82 and the software program of the application Z 84 are detected as movable software programs, and therefore, if "YES" is determined in the step S230, the process proceeds to the step S231. In the step S231, a software selection prompting screen on the side of the source of the movement as shown in Figure 18(B) is displayed, and in the step S233, a selecting operation is waited. Then, in the step S235, it is determined whether or not any one of the software programs is selected on the side of the source of the movement. If "NO" here, that is, if the "return" is selected on the side of the source of the movement, the process returns to the step S219. If "YES" in the step S235, the process proceeds to the step S237. Here, the "game X" shall be selected on the side of the source of the movement.

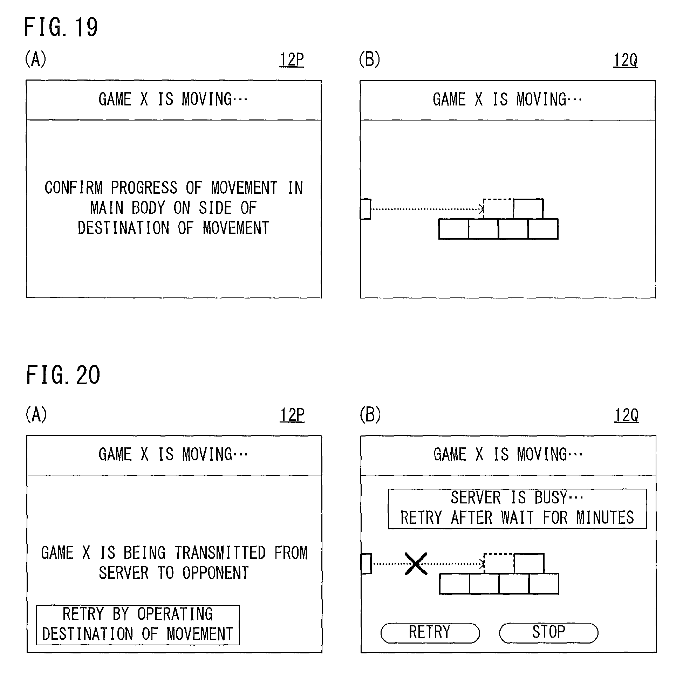

Next, the CPU 42P displays a message screen (a message including "confirm the progress of the movement in the main body of the destination of the movement", for example) as shown in Figure 19(A) in the step S137, and transmit the movement information of the game X in the step S139. The movement information includes a title (game ID), an icon of the game X, etc. Thereafter, transmission of a receipt notification (for example Ack) from the destination of the movement is waited in the step S 141, and then, the process proceeds to the step S 143 to transmit the additional data 82b of the game X. Then, in the step S 145, an additional data movement completion notification is waited, and in the step S 147, it is determined whether or not there is the notification. If the additional data movement completion notification is received from the destination of the movement, "YES" is determined in the step S 147, and the process proceeds to the step S 149a in Figure 24. If an error notification is received, "NO" is determined in the step S 147, an error display is performed in the step S148, and the process proceeds to the step S165 in Figure 22.

On the other hand, the CPU 42Q displays a movement reception screen shown in Figure 19(B) in the step S237, receives the movement information of the game X in the step S239, and returns the receipt notification (Ack, for example) to the destination of the movement in the step S241. Thereafter, in the step S243, the additional data 82b of the game X is received, and in the step S245a, the received additional data 82b of the game X is written to the temporary memory area, that is, the main memory 48Q. Then, in the step S245b, it is determined whether or not there is an error in the additional data 82b of the game X stored in the main memory 48Q, and if "NO", the additional data movement completion notification is transmitted in the step S247 while if "YES", the error notification is transmitted in the step S248, and then, the process proceeds to the step S265 in Figure 25.

Next, referring to Figure 24 and Figure 27, the CPU 42P switches from the local communication to the Wi-Fi communication in the step S 149a, and then instructs the server 102 to transfer the right of use in the step S 149b. Here, transferring the right of use of the game X belonging to the game apparatus 10P to the game apparatus 10Q is instructed. Then in the step S 149c, transmission of a right of use transfer completion notification from the server 102 is waited, and in the step S 149d, it is determined whether or not there is the notification. If "YES" here, switching from the Wi-Fi communication to the local communication is performed in the step S149e, and then, the process proceeds to the step S 151. If "NO" in the step S 149d, that is, if an error notification is received, an error display is performed in the step S163, and the process proceeds to the step S 165 in Figure 22.

In the step S 151, the completion of the right of use transfer is notified to the destination of the movement, and in the step S153, the main body data of the game X 82a and the additional data 82b (that is, the software program of the game X 82) are erased from the save area, that is, the memory for saved data 52P. Then, in the step S155, a movement completion notification from the destination of the movement is waited, and it is determined whether or not there is the notification in the step S 157. If "YES" in the step S 157, the process returns to the step S119 in Figure 22. On the other hand, if "NO" in the step S 157, that is, if an error notification is received, the process shifts to the step S 159 to determine whether or not there is a retry possible notification, and if "NO" here, that is, if a further error notification is received, an error display is performed in the step S163, and then, the process proceeds to the step S 165 in Figure 22. If "YES" in the step S 159, that is, if an retry possible notification is received, the process proceeds to the step S161 to display a dialogue to prompt the player to retry on the side of the destination of the movement as shown in Figure 20(A) is displayed on the message screen similar to Figure 19(A) (the content of the message may be updated). Thereafter, the process returns to the step S 155.

On the other hand, the CPU 42Q waits for the right of use transfer completion notification from the source of the movement in the step S249, and it is determined whether or not there is the notification in the step S251. If "YES" here, the process proceeds to the step S253a. If "NO" in the step S251, that is, if an error notification is received, the process proceeds to the step S265 in Figure 25. In the step S253a, switching from the local communication to the Wi-Fi communication is made, in the step S253b, downloading the main body data of the game X 82a is instructed to the server 102, and in the step S253c, the main body data of the game X 82a is received. In the step S253d, it is determined whether or not the reception is completed, and if "NO" here, that is, if the reception is not completed, the process shifts to the step S259. If "YES" in the step S253d, switching from the Wi-Fi communication to the local communication is performed in the step S253e, and the received main body data of the game X 82a is written to the save area, that is, the memory for saved data 52Q in the step S255a. Next, in the step S255b, the additional data 82b of the game X received before is moved from the temporary memory area to the save area so as to be connected (unified) with the main body data of the game X 82a, and in the step S255c, it is determined whether or not there is an error in the software program of the game X 82 obtained through the connection. If "NO" here, the movement completion notification is transmitted to the source of the movement in the step S257, and then, the process returns to the step S219 in Figure 25. If "YES" in the step S255c, the error notification in relation to the movement is transmitted in the step S263, and the process proceeds to the step S265 in Figure 25.

In the step S259, it is determined whether or not retry is possible as to the download of the main body data of the game X 82a from the server 102. If the failure of the completion of the reception is due to the server 102 or the heavy traffic of the Internet 110, "YES" is determined in the step S259, and the process proceeds to the step S261a. If the failure of the completion of the reception is due to a matter except for the heavy traffic, for example, such as the breakdown of the server 102, it is determined that the retry is impossible, and the process proceeds to the step S262. In the step S261a, the retry possible notification is transmitted to the source of the movement. In the step S261b, a "retry" button and a "stop" button are displayed on the movement reception screen as shown in Figure 20(A), and a button operation is waited in the step S261c. Then, in the step S261d, it is determined whether or not there is a retry operation. When a button operation indicating "retry" is performed, the process returns to the step S253 while if a button operation indicating "stop" is performed, the process proceeds to the step S262. In the step S262, switching from the Wi-Fi communication to the local communication is made, and in the step S263, a retry error notification is transmitted, and the process proceeds to the step S265 in Figure 25.

Next, processing when the "additional data" is selected as an object to be moved (category) is explained. In this case, the CPU 42P executes the steps S 167-S 174 in Figure 28, and the CPU 42Q executes the steps S267-S274 in Figure 29. Referring to Figure 28 and Figure 29, the CPU 42P determines whether or not there is movable additional data in the step S167. More specifically, if the additional data is stored in the memory for saved data 52P as to the software program that is registered in the own (P) right of use list 72p and the opponent (Q) right of use list 72q on the basis of the own (P) right of use list 72p and the opponent (Q) right of use list 72q, "YES" is determined. On the other hand, if there is no such additional data, "NO" is determined. If "NO" in the step S 167, "no relevant software" is displayed in the step S168, and then, and the process returns to the step S 119 in Figure 22. If "YES" in the step S167, the additional data is transmitted to the destination of the movement in the step S169, and an additional data movement completion notification is waited in the step S 171. Then, in the step S 173, it is determined whether or not there is the notification, and if "YES", the process returns to the step S119 in Figure 22. If "NO" in the step S 173, that is, if an error notification is received, an error display is performed in the in the step S 174, and the process proceeds to the step S 165 in Figure 22.

On the other hand, the CPU 42Q determines whether or not there is the movable additional data on the side of the source of the movement in the step S267. More specifically, the determination result in the step S167 is acquired from the source of the movement, and the determination result is regarded as its own (steps of transmitting and receiving the determination result are omitted in Figure 28 and Figure 29). If "NO" in the step S267, the process returns to the step S219 in Figure 25. If "YES" in the step S267, the additional data is received from the source of the movement in the step S269, and the additional data is written to the save area, that is, the memory for saved data 52Q in the step S271a. Then, in the step S271b, it is determined whether or not there is an error in the stored additional data, and if "YES", the error notification is transmitted in the step S274, and then, the process proceeds to the step S265 in Figure 25. If "NO" in the step S271b, the additional data movement completion notification is transmitted in the step S273, and the process returns to the step S219 in Figure 22.

Here, in another embodiment, irrespective of the right of use of the software, the additional data stored in the memory for saved data 52P is totally or selectively transmitted.

Next, the processing when the "set data" is selected as an object to be moved (category) is explained. In this case, the CPU 42P executes the steps S 175-S 182 in Figure 30, and the CPU 42Q executes the steps S275-S282 in Figure 31. Referring to Figure 30 and Figure 31, the CPU 42P determines whether or not there is movable set data in the step S 175. More specifically, if the data indicating the setting of the game apparatus 10P itself (user name, user color, the time, etc.) is stored in the memory for saved data 52P, "YES" is determined. On the other hand, if there is no such set data, "NO" is determined. If "NO" in the step S 175, "no relevant set data" is displayed in the step S 176, and then, the process returns to the step S 119 in Figure 22. If "YES" in the step S 175, the set data is transmitted to the destination of the movement in the step S 177, and a set data movement completion notification is waited in the in the step S 179. Then, in the step S 181, it is determined whether or not there is the notification, and if "YES", the process returns to the step S 119 in Figure 22. If "NO" in the step S 181, that is, if an error notification is received, the error display is performed in the step S 182, and then, the process proceeds to the step S165 in Figure 22.

On the other hand, the CPU 42Q determines whether or not there is movable set data on the side of the source of the movement in the step S275. More specifically, the determination result in the step S 175 is acquired from the source of the movement, and this may be regarded as its own determination result (steps of transmitting and receiving the determination result are omitted in Figure 30 and Figure 31). If "NO" in the step S275, the process returns to the step S219 in Figure 25. If "YES" in the step S275, the set data is received from the source of the movement in the step S277, and the set data is written to the save area, that is, the memory for saved data 52Q in the step S279a. Then, in the step S279b, it is determined whether or not there is an error in the stored set data, and if "YES", the error notification is transmitted in the step S282, and the process proceeds to the step S265 in Figure 25. If "NO" in the step S279b, the set data movement completion notification is transmitted in the step S281, and the process returns to the step S219 in Figure 22.

Next, a case that the "collective movement" is selected as movement processing is explained. In this case, the CPU 42P executes the steps in S129-S182 shown in Figure 32-Figure 34, and the CPU 42Q executes the steps S229-S282 in Figure 35-Figure 37.

The movement of the software in the steps S129-S163 shown in Figure 32 and Figure 33 is the processing obtained by omitting the steps S131-S135 in relation to the software selection in the software movement in the steps S129-S163 shown in Figure 23 and Figure 24. Accordingly, if "YES" in the step S130a, the process directly proceeds to the step S 137 to display the movement transmission screen. Except for the point, this is similar to the software moving processing shown in Figure 23 and Figure 24, and therefore, the explanation therefor is omitted.

The movement of the additional data in the steps S 167-S 174 shown in Figure 34 is the processing similar to that of the movement of the additional data in the steps S 167-S 174 shown in Figure 28. However, these are different in that if "YES" in the step S 173 after the step S168, or after the step S 174, the process proceeds to the step S 175.

The movement of the set data in the steps S 175-S 182 shown in Figure 34 is the processing similar to the movement of the set data in the step S 175-S 182 shown in Figure 30. However, these are different in that after the step S 176, or if "YES" in the step S181, the process returns to the step S165.

The movement of the software program in the steps S229-S263 shown in Figure 35 and Figure 36 is the processing obtained by omitting the steps S231-S235 in relation to the software program selection in the movement of the software in the steps S229-S263 shown in Figure 26 and Figure 27. Accordingly, if "YES" in the step S230, the process directly proceeds to the step S237 to display the movement reception screen. Except for that, this is similar to the software moving processing in Figure 26 and Figure 27, and therefore, the detailed explanation is omitted.

The movement of the additional data in the steps S267-S274 in Figure 37 is the processing similar to the movement of the additional data in the steps S267-S274 in Figure 29. However, these are different in that if "NO" in the step S267 after the step S273 or after the step S274, the processing proceeds to the step S275.

The movement of the set data in the steps S275-S282 in the same Figure 37 is processing similar to the movement of the set data in the steps S275-S282 shown in Figure 30. However, these are different in that if "NO" in the step S275 or after the step S281, the processing returns to the step S265.

The CPU 104 of the server 102 executes movement processing according to the flowchart in Figure 39 in a state that at least one of the game apparatuses 10P and 10Q is connected to the server 102 by the Wi-Fi connection. The CPU 104 waits for a request or an instruction from the game apparatuses 10P and/or 10Q through an event queue loop through steps S301-S303 periodically executed. In the step S301, it is determined whether or not there is a request of the right of use list, in the step S303, it is determined whether or not there is a right of use transfer instruction, and in a step S305, it is determined whether or not there is a download instruction.

If "YES" in the step S301, the process shifts to a step S307 to provide the right of use list of the source of the request to the source of the request, and then, the process returns to the event queue loop. More specifically, identification information (main body ID, account in relation to a content moving service, etc.) of the game apparatus 10P, 10Q itself is appended to the request or the instruction from the game apparatuses 10P, 10Q. The CPU 104 extracts the right of use list 72p, 72q corresponding to the identification information from the memory 106, and transmits the same to the source of the request through the Wi-Fi communication module 108.

If "YES" in the step S303, the process shifts to a step S309 to determine whether or not the right of use transfer instruction is appropriate, and if "NO", an error notification is performed in a step S319, and then, the process returns to the event queue loop. In the right of use transfer instruction, the identification information (X) of the object to be moved (game X), and the identification information (P→Q) of the source of the movement (game apparatus 10P) and the destination of the movement (game apparatus 10Q) are appended. The right of use list 72p, 72q within the memory 106 is searched on the basis of such identification information to make confirmation as to a series of items, such as whether or not there are accounts of the source of the movement and the destination of the movement, and whether or not the source of the movement has the right of use of the object to be moved. If there is even one item that is not confirmed, "NO" is determined in the step S309. If all the items are confirmed, "YES" is determined in the step S309, and the process proceeds to a step S311.

In the step S311, by updating the right of use lists 72p, 72q within the memory 106, the right of use of the obj ect to be moved is transferred from the source of the movement to the destination of the movement. Then, in a step S313, a right of use transfer completion is notified to the source of the movement (to the destination of the movement in a modified example described later, or to both of the source of the movement and the destination of the movement under certain circumstances). After the notification, the process returns to the event queue loop.

If "YES" in the step S305, the process shifts to a step S315 to determine whether or not the download instruction is appropriate. If "NO", an error notification is performed in a step S319, and then, the process returns to the event queue loop. In the download instruction, the identification information (X) of the object to be moved (game X) and the identification information (Q) of the destination of the movement (game apparatus 10Q) are appended, and the right of use list 72q within the memory 106 is searched on the basis of such identification information to make confirmations as to a series of items, such as whether or not there is the account of the destination of the movement, whether or not the destination of the movement has the right of use of the object to be moved (as a result of the precedent right of use transfer). If there is even one item that is not confirmed, "NO" is determined in the step S315. If all the items are confirmed, "YES" is determined in the step S315, and the process proceeds to a step S317. In the step S317, an object to be moved is downloaded with respect to the destination of the movement, and then, the process returns to the event queue loop.

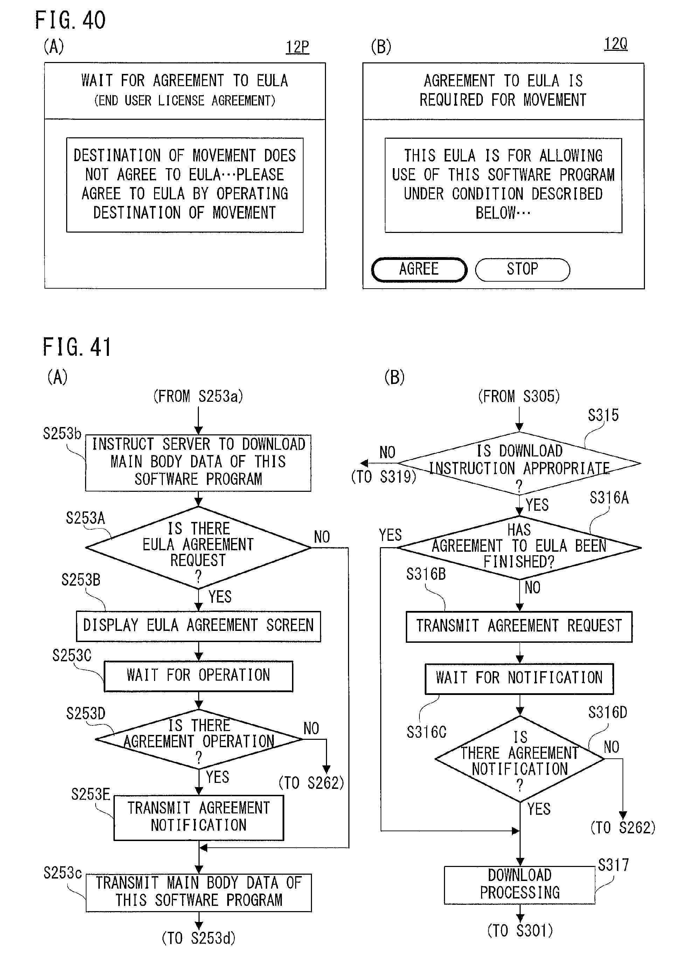

Here, a situation of an agreement to the end user license (EULA) of each software program is described in the right of use lists 72p and 72q, and in a case that the destination of the movement does not agree to the end user license (EULA) of the object to be moved, an agreement operation is required to be performed on the side of the destination of the movement, and downloading may be performed only in agreement. In this case, an agreement operation prompting screen on the side of the destination of the movement as shown in Figure 40(A) is displayed on the LCD 12P of the source of the movement, and an EULA agreement screen is displayed on the LCD 12Q of the destination of the movement as shown in Figure 40(B). Furthermore, the flowcharts of the destination of the movement and the server 102 are partly changed as shown in Figure 41 (A) and Figure 41 (B).

The flowchart of the destination of the movement shown in Figure 41 (A) is obtained by adding new steps S253A-S253E between the steps S253b and S253c shown in Figure 27. In the step S253A, it is determined whether or not there is a EULA agreement request from the server 102, and if "NO", the process proceeds to the step S253c. If "YES" in the step S253A, the EULA agreement screen as shown in Figure 40(B) is displayed in the step S253B, and an agreement operation is waited in the step S253C. In the step S253D, it is determined whether or not an agreement operation is performed, and if "NO" here, that is, if a "stop" operation is performed, the process proceeds to the step S262. If "YES" in the step S253D, that is, if an "agreement" operation is performed, an agreement notification is transmitted to the server 102 in the step S253E, and then, the process proceeds to the step S253c.

The flowchart of the server 102 shown in Figure 41 (B) is obtained by adding new steps S316A-S316D between the steps S315 and S317 as shown in Figure 39. In the step S316A, it is determined whether or not the destination of the movement has already agreed to the EULA of the software program on the basis of the right of use list 72q within the memory 106, and if "YES" here, the process proceeds to the step S317. If "NO" in the step S316A, an agreement request is transmitted to the destination of the movement in the step S316B, and an agreement notification is waited in the step S316C. Then, in the step S316D, it is determined whether or not there is an agreement notification, and if "NO", the process proceeds to the step S262 while if "YES", the process proceeds to the step S317.

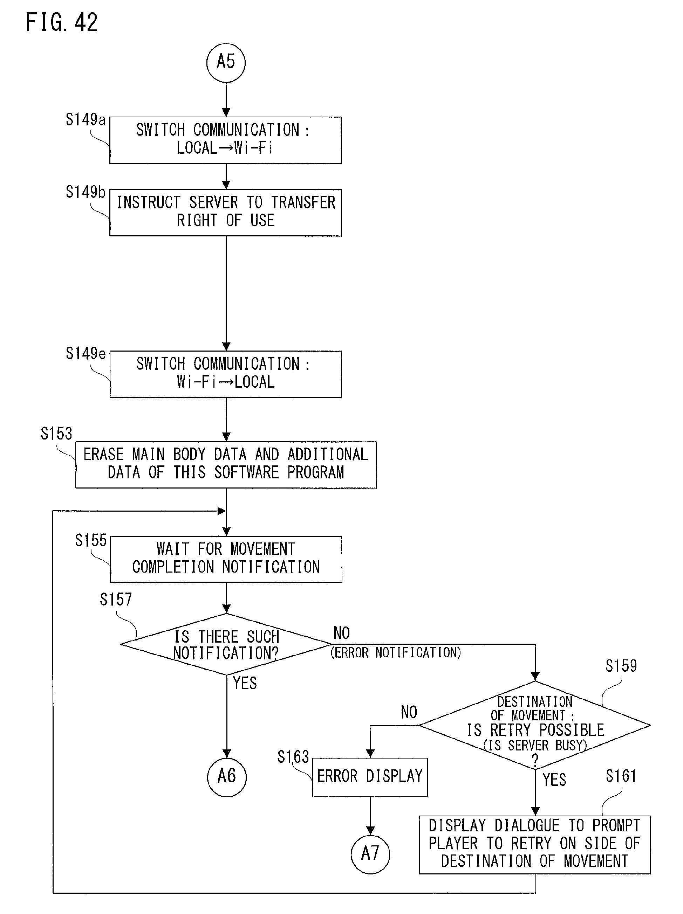

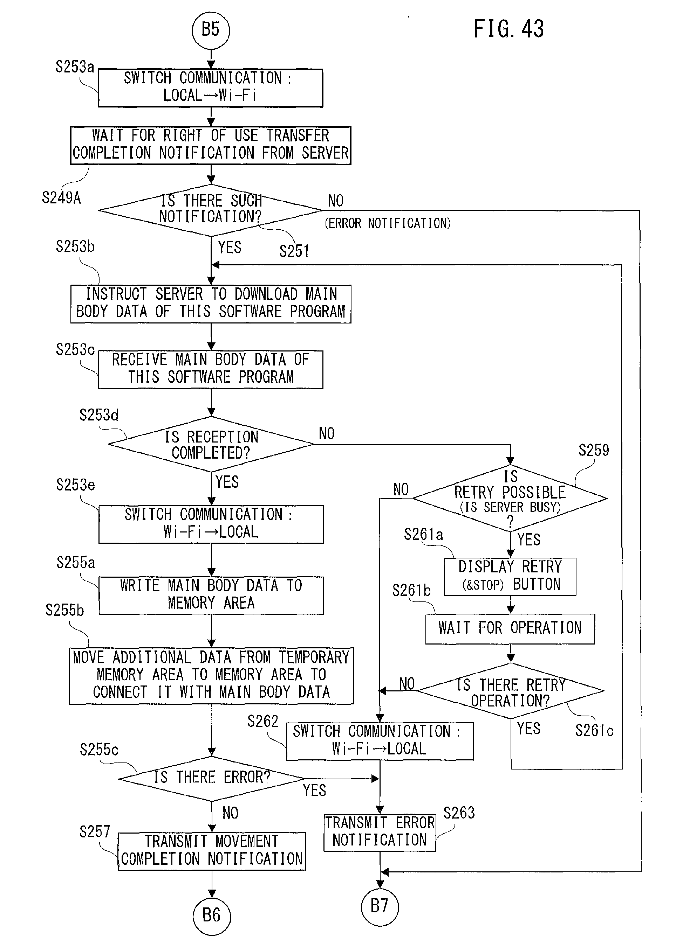

Here, the server 102 transmits a right of use transfer completion notification to the source of the movement in the step S313, but this may directly be transmitted to the destination of the movement. In this case, flowcharts of the source of the movement and the destination of the movement are partly changed as shown in Figure 42 and Figure 43. Processing in steps S149a-S163 shown in Figure 42 is obtained by omitting the steps S 149c, S 149d and S151 from the step S149a-S163 shown in Figure 24. Accordingly, the source of the movement waits for the right of use transfer completion notification from the server 102 and does not transmit the right of use transfer completion notification to the destination of the movement.

Processing in steps S253a-S263 shown in Figure 43 is obtained by moving the step S253a in front of the step S251, and adding a step S249A between the steps S253a and step S251 in the steps S249-S263 shown in Figure 27. Accordingly, the destination of the movement transmits a additional data movement completion notification in the step S247 in Figure 26, then immediately switches from the local communication to the Wi-Fi communication in the step S253a in Figure 43, waits for the right of use transfer completion notification from the server 102 in the step S249A, and proceeds to the step S251.

In addition thereto, the server 102 may transmit the right of use transfer completion notification to both of the source of the movement and the destination of the movement in the step S313, and in this case, only the steps S 149c and S 149d are omitted in the steps S149a-S163 shown in Figure 24. The flowchart of the destination of the movement may be similar to that in Figure 43.

Here, a case that the software program of the game X 82 is moved is explained in the above description, but processing similar to the above description is performed when the software program of the application Z 84 is moved. As one example of the application Z, for example, an image/sound managing application for managing images imaged by the cameras 16, 18 and sound data recorded by the microphone 32 is enumerated. Such the main body data 84a of the application Z is a program for hierarchically managing the image /sound data, and the additional data 84 includes data indicating a hierarchical structure created in the progress of the execution of the program (set data set to the applications, such as the game X and the application Z may be included in the additional data of the application) in addition to the image/sound data to be managed by executing the program.

As understood from the above description, from a certain viewpoint, the game system 100 of this embodiment includes the game apparatuses 10P and 10Q and the server 102, and the game apparatus 10P has a first memory (memory for saved data 52P) storing the software program (software program of the game X 80) being made up of the program (main body data of the game X 82a) and the save data (the additional data 82b of the game X), the game apparatus 10Q has a second memory (memory for saved data 52Q) capable of additionally storing the software program, and the server 102 has a third memory (memory 106) storing the program.

The game apparatus 10P transmits the save data of the first memory to the game apparatus 10Q by the local communication (S143), and the server 102 transmits the program of the third memory to the game apparatus 10Q by the Wi-Fi communication (S317). The game apparatus 10Q receives the save data (S243), receives the program (S253c), and additionally stores them as a software program in the second memory (S245a, S255a, S255b). Thus, it is possible to transfer the software program from the game apparatus 10P to the game apparatus 10Q with a load imposed on the server 102 reduced.

It is preferable that the right of use belonging to the game apparatus 10P is set to the software program, and the third memory further stores the information in relation to the right of use of the software program (right of use list 72p, 72q), and the game apparatus 10P instructs the server 102 to transfer the right of use of the software program from the game apparatus 10P to the game apparatus 10Q (S149b). The server 102 updates the right of use information stored in the third memory on the basis of the transfer instruction from the game apparatus 10P (S311). The game apparatus 10Q executes additional storing processing in a case that the right of use information is updated in the server 102. Thus, the transfer of the software program is completed only after the right of use information is updated in the server 102 (the software becomes useable in the game apparatus 10Q), and therefore, it is possible to safely transfer the software program.

Here, in the aforementioned embodiment, the object to be moved is mainly a software program (program content), but this may be an AV content for reproducing at least one of characters, sounds and images.

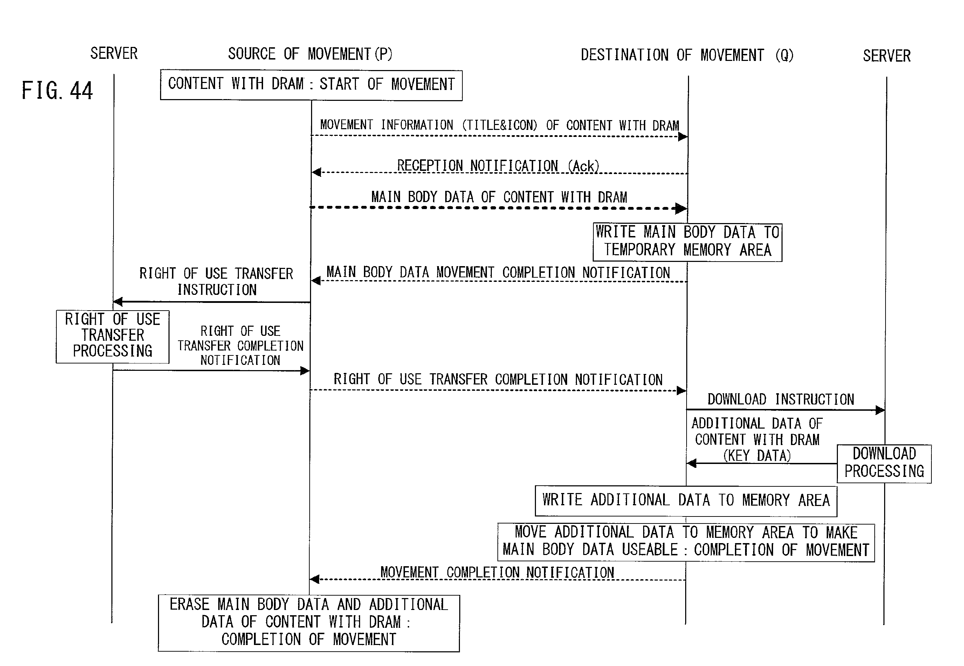

In addition, in the aforementioned embodiment, the program being the main body data common to the game apparatuses 10P and 10Q (capable of being commonly used in the game apparatuses 10P and 10Q) is transmitted from the server 102 to the game apparatus 10Q, and the save data being additional data inherent in the game apparatus 10P is transmitted from the game apparatus 10P to the game apparatus 10Q, but content data with DRM being the main body data common to the game apparatuses 10P and 10Q may be transmitted from the game apparatus 10P to the game apparatus 10Q, and key data being the additional data inherent in the game apparatus 10Q may be transmitted from the server 102 to the game apparatus 10Q. The communication sequence in such the embodiment is shown in Figure 44.

In the sequence in Figure 44, the content data with DRM being the main body data is first transmitted from the source of the movement to the destination of the movement by utilizing the local communication, and in response to the right of use transfer on the side of the server 102, the key data being the additional data is downloaded from the server 102 to the destination of the movement by utilizing the Wi-Fi communication. On the side of the destination of the movement, the received content data with DRM and key data are additionally stored in the save area to allow the destination of the movement to use the content in the condition the same as or different from the source of the movement. Here, the movement of the content data with DRM may be performed via a portable storage medium, like the memory card 38a, etc.

Here, the additional data is not required to be inherent in the game apparatus 10P, and may be referred when the main body data is in use. For example, if the main body data is content data capable of being reproduced by a media player (not illustrated) that is installed in the game apparatus 10, the additional data is key data necessary for reproducing the content data by the media player. This makes it possible to move the media data protected by the key.

Furthermore, from another viewpoint, the game system 100 of this embodiment includes the game apparatuses 10P and 10Q, and the game apparatus 10P has a first memory (52P) and the touch panel 28P storing the data (82a, 82b,..., 86), and the game apparatus 10Q has a second memory (52Q) capable of additionally storing data and the LCD 12Q. The game apparatus 10P accepts an operation input to the touch panel 28P (S113, S121, S133), transmits the operation input information (76p) (S55), and transmits the data in the first memory (S 143, S169, S 177). The game apparatus 10Q receives the operation input information (S57), displays based on it (S211, S219, S231), receives data (S243, S269, S277), and additionally stores it in the second memory (S245a, S255a, S255b, S271a, S279a). Thus, transferring the data is performed by the operation on the side of the game apparatus 10P, capable of reducing an erroneous operation.

Additionally, in this embodiment, the program (main body data of the game X 82a) is transmitted from the server 102 to the game apparatus 10Q by utilizing the Wi-Fi communication, but this may be transmitted together with the save data (the additional data 82b of the game X) from the game apparatus 10P to the game apparatus 10Q by utilizing the local communication. In this case the "game X" is selected on the software selection screen in Figure 18(A) after the "software" is selected on the object (category) selection screen in Figure 17(A), the game apparatus 10P transmits the program (main body data of the game X 82a) for executing the software program and the save data (the additional data 82b of the game X). On the other hand, in a case that the "save data" is selected on the object (category) selection screen in Figure 17(A) to display a save data selection screen not shown from which the "game X" is selected, the relevant save data (the additional data 82b of the game X) may be transmitted. Or, when the "software" is selected on the object (category) selection screen in Figure 17(A), it is determined whether or not there is the main body data of the game X 82a in the game apparatus 10P, and if "NO", the main body data of the game X 82a and the additional data 82b are transmitted while if "YES", only the additional data 82b of the game X may be transmitted.

The game system 100 is explained in the above description, but the invention can be applied to an information processing system having an first information processing apparatus and a second information processing apparatus, and capable of transferring the data between the first and second information processing apparatuses by utilizing the Wi-Fi communication, various short distance wireless communications, a wire communication, or a portable storage medium.

Although the present invention has been described and illustrated in detail, it is clearly understood that the same is by way of illustration and example only and is not to be taken by way of limitation, the scope of the present invention being limited only by the terms of the appended claims.

Furthermore, it should be understood that overall the embodiment of the present invention, a representation of a singular form also includes a concept of the plural form unless otherwise stated. Accordingly, an article or an adjective in the singular (for example, "a", "an", "the", etc. for English) also includes a concept of the plural form unless otherwise stated.

## Claims

1. An information processing system (100) including a first information processing apparatus (10P) having a first storage (52P) storing a content (82) being made up of first data (82b) and second data (82a), a second information processing apparatus (10Q) having a second storage (52Q) capable of storing said content and a server (102) having a third storage (106) storing at least said second data (82a), connecting them to allow for communications therebetween, and providing said content from said first information processing apparatus to said second information processing apparatus, wherein
said first information processing apparatus comprises:
a first data transmitter (S 143) which directly transmits said first data stored in said first storage to said second information processing apparatus,
said server comprises:
a second data transmitter (S317) which transmits said second data stored in said third storage to said second information processing apparatus,
said second information processing apparatus comprises:
a first data receiver (S243) which directly receives said first data from said first information processing apparatus;
a second data receiver (S253c) which receives said second data from said server; and
an additional-storage (S245a, S255a, S255b) which stores said first data received by said first data receiver and said second data received by said second data receiver in said second storage as said content.

2. An information processing system according to claim 1, wherein
one of said first data and said second data is main body data that can be commonly used in said first information processing apparatus and said second information processing apparatus, and
the other of said first data and said second data is additional data to be referred when said main body data is in use.

3. An information processing system according to claim 2, wherein
said content is a content in relation to an application software program,
said second data is a program for executing said application software program in each of said first information processing apparatus and said second information processing apparatus, and
said first data is save data indicating result of execution or progress of execution in said first information processing apparatus of said program.

4. An information processing system according to claim 2, wherein
said content is a content capable of being reproduced by a media player,
said first data is main body data of the content capable of being reproduced by said media player, and
said second data is key data required to reproduce said content by said media player.

5. An information processing system according to claim 1, wherein
said first information processing apparatus further comprises:
a first connector (5 8P, S1) which makes a connection so as to be able to at least directly transmit data to said second information processing apparatus, and
said second information processing apparatus further comprises:
a second connector (58Q, S1) which makes a connection so as to be able to at least directly receive data from said first information processing apparatus, wherein
transmission and reception by said first data transmitter and by said first data receiver are respectively performed after the connections by said first connector and said second connector are made.

6. An information processing system according to claim 1, wherein
said content is set to be useable in said first information processing apparatus, said third storage further stores information in relation to an apparatus capable of using said content (72p, 72q),
said first information processing apparatus further comprises:
a transfer instructor (S 149b) which issues to said server a transfer instruction for transfering the apparatus capable of using said content from said first information processing apparatus to said second information processing apparatus, and
said server further comprises:
a right of use updater (S311) which updates the information in relation to an apparatus capable of using said content stored in said third storage on the basis of the transfer instruction from said first information processing apparatus, wherein
said additional-storage executes storing processing in a case that the information in relation to an apparatus capable of using said content is updated by said right of use updater.

7. An information processing system according to claim 6, wherein
the information in relation to an apparatus capable of using said content is right of use information of said content.

8. An information processing system according to claim 6, wherein
said second data transmitter transmits said second data to said second information processing apparatus after the information in relation to an apparatus capable of using said content is updated by said right of use updater.

9. An information processing system according to any one of claims 6 to 8, wherein
said server further comprises:
a first completion notifier (S313) which makes a completion notification to said first information processing apparatus that the information in relation to an apparatus capable of using said content has been updated after the information in relation to an apparatus capable of using said content is updated by said right of use updater,
said first information processing apparatus further comprises:
a second completion notifier (S 151) which makes a completion notification to said second information processing apparatus that the information in relation to an apparatus capable of using said content has been updated on the basis of the completion notification from said server, wherein
said additional-storage stores said received content in said second storage on the basis of the completion notification from said first information processing apparatus (S249, S251).

10. An information processing system according to claim 9, wherein
said first information processing apparatus comprising:
an eraser (S153) which erases said content from said first storage after said first data is transmitted by said first data transmitter, and the completion notification is made by said second completion notifier.

11. An information processing system according to any one of claims 6 to 8, wherein
said server further comprises:
a completion notifier (S313) which makes a completion notification to said second information processing apparatus that the information in relation to an apparatus capable of using said content has been updated after the information in relation to an apparatus capable of using said content is updated by said right of use updater, wherein
said additional-storage stores said received content in said second storage on the basis of the completion notification from said server (S249A).

12. An information processing system according to claim 1, wherein
said first information processing apparatus further comprises:
an eraser (S153) which erases said content from said first storage after said first data is transmitted by said first data transmitter.

13. An information processing system according to claim 1, wherein
said first information processing apparatus further comprises:
a content-related information transmitter (S 139) which transmits content-related information (78) which is in relation to said content to said second information processing apparatus,
said second information processing apparatus further comprises:
a content-related information receiver (S239) which receives said content-related information from said first information processing apparatus; and
a second data requester (S253b) which requests said second data to said server on the basis of said content-related information received from said first information processing apparatus, wherein
said second data transmitter extracts and transmits said second data from said third storage on the basis of the request from said second data requester (S305).

14. An information processing system according to claim 1, wherein
said first information processing apparatus and said server, and said server and said second information processing apparatus are connected to be able to communicate with each other via the Internet (110),
said first information processing apparatus and said second information processing apparatus are connected to be able to communicate with each other by a predetermined short distance communication system,
transmission by said second data transmitter and reception by said second data receiver are performed via the Internet, and
transmission by said first data transmitter and reception by said first data receiver are performed by said predetermined short distance communication system.

15. An information processing program (70, 71) for an information processing system (100) including a first information processing apparatus (10P) having a first storage (52P) storing a content (82) being made up of first data (82b) and second data (82a), a second information processing apparatus (10Q) having a second storage (52Q) capable of storing said content and a server (102) having a third storage (106) storing at least said second data (82a), connecting them to allow for communications therebetween, and providing said content from said first information processing apparatus to said second information processing apparatus,
said information processing program causes a computer (42P) of said first information processing apparatus to function as:
a first data transmitter (S 143) which directly transmits said first data stored in said first storage to said second information processing apparatus,
said information processing program causes a computer (104) of said server to function as:
a second data transmitter (S317) which transmits said second data stored in said third storage to said second information processing apparatus,
said information processing program causes a computer (42Q) of said second information processing apparatus to function as:
a first data receiver (S243) which directly receives said first data from said first information processing apparatus;
a second data receiver (S253c) which receives said second data from said server, and
an additional-storage (S245a, S255a, S255b) which stores said first data received by said first data receiver and said second data received by said second data receiver in said second storage as said content.

16. An information processing method to be performed by an information processing system (100) including a first information processing apparatus (10P) having a first storage (52P) storing a content (82) being made up of first data (82b) and second data (82a), a second information processing apparatus (10Q) having a second storage (52Q) capable of storing said content and a server (102) having a third storage (106) storing at least said second data (82a), connecting them to allow for communications therebetween, and providing said content from said first information processing apparatus to said second information processing apparatus, comprising steps of:
directly transmitting, executed by said first information processing apparatus, said first data stored in said first storage to said second information processing apparatus (S 143); and
transmitting, executed by said server, said second data stored in said third storage to said second information processing apparatus (S317), wherein
said second information processing apparatus executing:
directly receiving said first data from said first information processing apparatus (S243);
receiving said second data from said server (253c), and
storing said received first data and said received second data in said second storage as said content (S245a, S255a, S255b).
